# EUROPÄISCHE PATENTSCHRIFT

(11) **EP 2 518 397 B1**
(45) Veröffentlichungstag und Bekanntmachung des Hinweises auf die Patenterteilung: **13.05.2020**
(21) Anmeldenummer: 12157213.5
(22) Anmeldetag: 28.02.2012
(51) Int. Cl.: F21S 41/663, F21S 41/24, F21S 41/143, B60Q 1/14

(54) **KFZ-Scheinwerfer mit einem Grundlichtmodul und einem Spotmodul zur Erzeugung einer Fernlicht-Lichtverteilung und dazugehörige Scheinwerferanlage**
Vehicle headlamp with a basic module and a spot module for creating a high beam light distribution and corresponding headlamp system
Phare de véhicule avec un module de base et un module spot pour produire un faisceau de route et système de phare correspondant

(30) Priorität: 27.04.2011 DE 102011017630; 16.06.2011 DE 102011077636
(43) Veröffentlichungstag der Anmeldung: 31.10.2012
(73) Patentinhaber: Automotive Lighting Reutlingen GmbH, 72762 Reutlingen (DE)
(72) Erfinder: Hamm, Michael, 72800 Eningen u.A. (DE); Rosenhahn, Ernst-Olaf, 72411 Bodelshausen (DE); Stefanov, Emil P., 72762 Reutlingen (DE)
(74) Vertreter: DREISS Patentanwälte PartG mbB

(56) Entgegenhaltungen:
- EP-A1- 2 068 071
- EP-A2- 2 037 167
- EP-A2- 2 280 215
- EP-A2- 2 306 074
- EP-A2- 2 306 075
- EP-A2- 2 517 929
- EP-A2- 2 587 125
- WO-A1-2013/020155
- DE-A1-102007 008 994
- DE-A1-102008 036 193
- DE-B3-102009 053 581
- US-A1- 2008 316 759

## Beschreibung

Die vorliegende Erfindung betrifft ein einen Kraftfahrzeugscheinwerfer nach dem Oberbegriff Anspruchs 1. Ein KFZ-Scheinwerfer ist aus der DE 10 2007 008 994 A1 bekannt. Aus der US 2008/0316759 A1 ist ein Scheinwerfersystem bekannt, mit dem sich eine Fernlichtgrundlichtverteilung und eine aus streifenförmigen Anteilen zusammengesetzte Fernlichtspotverteilung erzeugen lässt. Die EP 2 037 167 A2 und die EP 2 280 215 zeigen jeweils Fernlichtverteilungen, die sich aus einer Zeile einzelner Segmente zusammensetzen, die individuell steuerbar hell oder dunkel sein können.

Der KFZ-Scheinwerfer mit dem Spotmodul der vorliegenden Erfindung dient zur Erzeugung einer Spotverteilung einer Fernlicht-Lichtverteilung. Die Fernlicht-Lichtverteilung ist durch eine Überlagerung der Spotverteilung und einer durch mindestens ein anderes Modul erzeugten Grundverteilung gebildet.

Schließlich betrifft die vorliegende Erfindung auch eine Scheinwerferanlage für ein Kraftfahrzeug, umfassend zwei in einem Frontbereich seitlich an dem Fahrzeug angeordnete Kraftfahrzeugscheinwerfer der oben genannten Art.

Gattungsgemäße Lichtmodule bzw. Kraftfahrzeugscheinwerfer zur Erzeugung von Fernlicht, bei denen das Fernlicht durch eine Überlagerung einer gebündelten Spotverteilung und einer diffusen Grundverteilung gebildet wird, sind in unterschiedlichen Ausführungsformen aus dem Stand der Technik bekannt. Ein äußerer Rand der Spotverteilung läuft seitlich relativ weich aus, hat aber einen steileren Anstieg zu einer Vertikalen als die Grundverteilung. Die Grundverteilung hat eine größere Erstreckung in horizontaler und vertikaler Richtung als die Spotverteilung. Die maximale Beleuchtungsstärke der Spotverteilung ist größer als die der Grundverteilung. Die Grundverteilung leuchtet nicht nur einen Bereich um die Spotverteilung herum nach Art eines Halos (Lichtscheibe) mit weich auslaufendem Rand diffus aus, sondern überlagert auch die Spotverteilung und trägt somit zur Erreichung der gewünschten Beleuchtungsstärkemaxima im Bereich der Spotverteilung bei.

Die Grundverteilung kann auf eine beliebige Art und Weise erzielt werden. Aus dem Stand der Technik sind verschiedene Lichtmodule zur Erzeugung einer Grundverteilung bekannt. Diese können als Projektions- oder als Reflexionssystems ausgebildet sein und können als Lichtquellen Glühlampen, Gasentladungslampen, Halbleiterlichtquellen, insbesondere Leuchtdioden (LEDs), oder andere aufweisen.

Entsprechende aus dem Stand der Technik bekannte Fernlicht-Konzepte sind bspw. die folgenden:
- Komplettes Fernlicht aus einer oder mehreren Reflektorkammern ohne vertikale Unterteilung.

Ein entsprechender Scheinwerfer mit einem Lichtmodul zur Erzeugung eines typischen Halogenfernlichts kann als ein Bi-Xenon-Scheinwerfer oder als ein Leuchtdioden (LED)-Scheinwerfer ausgebildet sein. Der bekannte Scheinwerfer umfasst ein Lichtmodul zur Erzeugung des Fernlichts, das bspw. als ein Reflexions- oder als ein Projektionsmodul ausgebildet sein kann. Das Lichtmodul zur Erzeugung des Fernlichts kann auch zur Erzeugung einer abgeblendeten Lichtverteilung ausgebildet sein, wie dies bspw. bei den Bi-Funktions-Modulen der Fall ist. Alternativ kann der Scheinwerfer auch mindestens ein weiteres Lichtmodul zur Erzeugung einer abgeblendeten Lichtverteilung aufweisen. Ein Fernlicht-Modul mit LED-Lichtquellen kann in verschiedene Module, bspw. verschiedene Fernlicht-Reflektorkammern, unterteilt sein, wobei mindestens eines der Module bzw. eine der Kammern zur Erzeugung der Spotverteilung und mindestens ein anderes der Module bzw. eine andere der Kammern zur Erzeugung der Grundverteilung dient. Es ist aber auch denkbar, dass jede der Kammern eine ähnliche Einzel-Lichtverteilung erzeugt, wobei sich die Einzel-Lichtverteilung zu dem Gesamt-Fernlicht überlagern.

### - Automatische Fernlichtschaltung

Ein kameragesteuertes Fernlicht existiert bisher in verschiedenen Stufen. Die einfachste Stufe ist der Fernlichtassistent, der ohne Einfluss auf die Lichtverteilung bei der Detektion von Gegenverkehr automatisch von Fernlicht auf Abblendlicht umschaltet. Diese Funktion gibt es bereits seit 1952 und wurde erstmals von General Motors unter der Bezeichnung "Autronic Eye" eingeführt.

### - Adaptive Leuchtweiteregelung

Bei einem von Automotive Lighting entwickelten Modul für AFS (Adaptive Frontlighting System)-Funktionalität handelt es sich um ein als Projektionsmodul ausgebildetes Lichtmodul, das zur Erzeugung einer variablen Lichtverteilung ausgebildet ist. Insbesondere können nicht nur Abblendlicht und Fernlicht, sondern situationsabhängig auch andere Lichtverteilungen, bspw. Stadtlicht, Landstraßenlicht, Autobahnlicht, dynamisches Kurvenlicht und nahezu beliebig andere Lichtverteilungen erzeugt werden. Das Xenon-Bi-Funktions-Modul erlaubt die kameragesteuerte Anpassung der Reichweite bzw. des Verlaufs und der geometrischen Position der Hell-/ Dunkelgrenze einer abgeblendeten Lichtverteilung. Ein Steuergerät wertet die Positionen von vorausfahrenden oder entgegenkommenden Fahrzeugen aus und liefert die Informationen an eine Aktorsteuerung, die einen Aktor, bspw. in Form eines Schrittmotors, zur Variation der Lichtverteilung ansteuert. Dort wird dann bspw. die geometrische Position der Hell-/ Dunkelgrenze angepasst.

### - Teilfernlicht

Beim Teilfernlicht wird in einem Xenon-Fernlicht-Modul ein Bereich der Fernlicht-Lichtverteilung gezielt abgeschattet. Dabei schatten bewegliche, insbesondere um eine horizontale Drehachse klappbare, ebene Blendenanordnungen und/oder Blendenwalzen einen Bereich des Fernlichts ab, in dem andere Verkehrsteilnehmer detektiert wurden. Dadurch entstehen in der Fernlicht-Lichtverteilung helle bzw. dunkle Zonen mit einer ausgedehnten vertikalen Hell-/ Dunkelgrenze. Die Lichtmodule zur Erzeugung der bereichsweise abgeschatteten Teilfernlichtverteilungen bzw. die Scheinwerfer mit den Lichtmodulen werden mit einem geeigneten Aktor, bspw. mit einem Schrittmotor, so bewegt, dass ein vorausfahrendes Fahrzeug oder ein entgegenkommendes Fahrzeug im Bereich der dunklen Zone liegt.

Ein entsprechendes Anwendungsbeispiel ist bspw. ein Scheinwerfer mit einem AFS-Modul mit Xenon-Lichtquelle und einer Blendenanordnung umfassend mehrere Blendenelemente, die in der Ebene der Blendenanordnung mittels einer Kulissenführung relativ zueinander verschiebbar sind. Die Blendenanordnung mit Kulissenführung ist aus der DE 10 2005 012 303 A1 bekannt. Ein entsprechendes Lichtmodul ist bspw. aus der EP 1 640 658 A2 bekannt. Durch Verschieben der Blendenelemente relativ zueinander ergibt sich ein variabler Verlauf der horizontalen Hell-/ Dunkelgrenze. Das Lichtmodul erzeugt alleine eine Fernlicht-Lichtverteilung, d.h. das Fernlicht ergibt sich nicht aus einer Überlagerung einer Spot- und einer Grundverteilung. Bi-Funktion bedeutet, dass das Lichtmodul sowohl zur Erzeugung eines Abblendlichts als auch eines Fernlichts ausgebildet ist. Der bekannte Scheinwerfer erzeugt also neben Fernlicht auch AFS (Adaptive Frontlighting System)-konformes Abblendlicht gemäß Regelung 123 ECE.

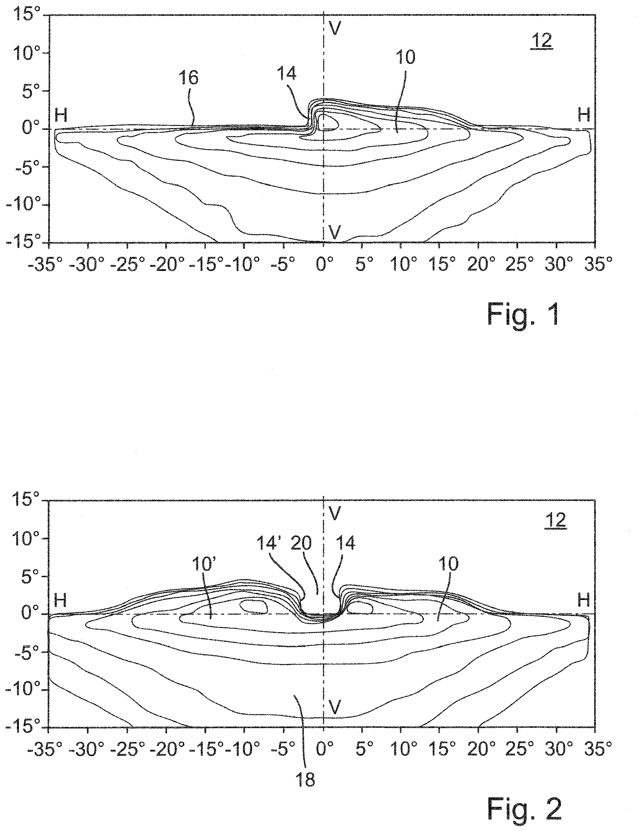

Figur 1 zeigt beispielhaft eine Lichtverteilung 10 eines Teilfernlichts, wie es von einem Scheinwerfer einer Scheinwerferanlage eines Kraftfahrzeugs auf einem in einem Abstand vor dem Fahrzeug angeordneten Messschirm 12 erzeugt wird. Auf dem Messschirm 12 ist bei 0° vertikal eine Horizontale HH und bei 0° horizontal eine Vertikale VV eingezeichnet. Der andere Scheinwerfer der Scheinwerferanlage erzeugt eine zu der dargestellten Lichtverteilung 10 um die Vertikale VV gespiegelte Lichtverteilung. Die von einem Scheinwerfer bzw. dem entsprechenden Lichtmodul erzeugte Teilfernlicht-Lichtverteilung 10 gemäß Figur 1 umfasst eine vertikale Hell-/ Dunkelgrenze 14 und eine daran angrenzende horizontale Hell-/ Dunkelgrenze 16, die im Wesentlichen wenige zehntel Grad, insbesondere -0,57°, unterhalb der Horizontalen HH verläuft. Die horizontale Position der vertikalen Hell-/ Dunkelgrenzen 14 der Teilfernlicht-Lichtverteilungen 10 kann bspw. durch horizontales Verschwenken des entsprechenden Lichtmoduls bzw. des gesamten Scheinwerfers variiert werden. Durch Überlagerung eines linken und eines rechten Teilfernlichts 10 entstehen ausgeblendete Zonen mit variabler Breite und Orientierung im Straßenraum vor dem Kraftfahrzeug.

Eine entsprechende Gesamt-Teilfernlicht-Lichtverteilung 18, umfassend die von einem Lichtmodul eines ersten Scheinwerfers erzeugte Teilfernlicht-Lichtverteilung 10 aus Figur 1 und die dazu gespiegelte Teilfernlicht-Lichtverteilung 10' eines Lichtmoduls des anderen Scheinwerfers. Die Gesamt-Lichtverteilung 18 weist eine ausgeblendete Zone 20 auf, die beispielhaft in Figur 2 gezeigt ist. Die vertikale Hell-/ Dunkelgrenze der von dem anderen Scheinwerfer der Scheinwerferanlage erzeugten und zu der Teilfernlicht-Lichtverteilung 10 aus Figur 2 gespiegelten Lichtverteilung 10' ist in Figur 2 mit dem Bezugszeichen 14' bezeichnet. Charakteristisch ist, dass die Scheinwerfer zur Erzeugung dieser Lichtverteilung 18 ein bzw. zwei Projektions- bzw. Reflexions-Module umfassen und jedes Modul eine scharfe vertikale Hell-/ Dunkelgrenze 14, 14' erzeugt. In jedem Scheinwerfer entsteht dabei aus einem einzigen Modul eine Teilfernlicht-Lichtverteilung 10; 10' mit vertikaler Hell-/ Dunkelgrenze 14; 14'.

Ein entsprechender Scheinwerfer kann bspw. ein Xenon-Multi-Funktions-Modul aufweisen. Das Xenon-Multi-Funktions-Modul erzeugt neben einer abgeblendeten Lichtverteilung unterhalb einer horizontalen Hell-/ Dunkelgrenze die Fernlicht-Lichtverteilung als Ganzes, d.h. nicht unterteilt nach Spot- und Grundverteilung.

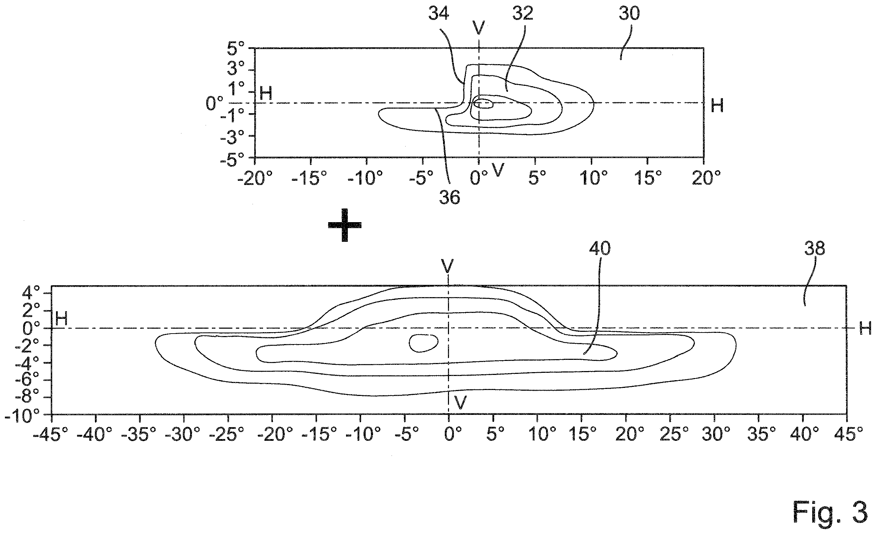

Ein LED-Multi-Funktions-Modul arbeitet analog zu dem genannten Xenon-Multi-Funktions-Modul und stellt ebenfalls eine vertikale Hell-/ Dunkelgrenze zur Verfügung. Es ist in der Ausdehnung aber relativ schmal und konzentriert sich auf den Spotbereich der Lichtverteilung. Dabei kann es eine Spotverteilung sowohl für Abblendlicht als auch für Fernlicht erzeugen. Ein entsprechendes Lichtmodul ist bspw. aus der DE 10 2007 049 309 A1 bekannt. Eine durch ein LED-Multi-Funktions-Modul erzeugte Lichtverteilung, wie sie sich auf einem in einem Abstand zu dem Lichtmodul angeordneten senkrechten Messschirm 30 ergibt, ist beispielhaft in Figur 3 oben gezeigt und in der Gesamtheit mit dem Bezugszeichen 32 bezeichnet. Die vertikale Hell-/ Dunkelgrenze ist mit dem Bezugszeichen 34, die angrenzende horizontale Hell-/ Dunkelgrenze mit dem Bezugszeichen 36 bezeichnet.

Eine Besonderheit des LED-Multi-Funktions-Moduls und anderer derartiger Konzepte mit LEDs als Lichtquellen ist das Erfordernis eines zweiten Fernlichts, das mit geringerer Intensität und technischem Anspruch (z.B. keine vertikalen Hell-/ Dunkelgrenze) die spotartige Fernlichtverteilung des LED-Multi-Funktions-Moduls ergänzt. Eine solche durch ein entsprechendes zweites Fernlicht-Modul erzeugte Grundverteilung, wie sie sich auf einem Messschirm 38 ergibt, ist beispielhaft in Figur 3 unten gezeigt und mit dem Bezugszeichen 40 bezeichnet. Das zweite Fernlicht-Modul zur Erzeugung der Grundverteilung kann bspw. als ein LED-Projektionsmodul mit einer Walzenblende ausgebildet sein.

Da ein einzelner LED-Chip nach derzeitigem Stand der Technik ca. 250 Lumen (lm) abgibt, eine Gasentladungslampe aber über 3.000 lm, werden zum Erzeugen der gewünschten bzw. gesetzlich vorgeschriebenen Beleuchtungsstärkewerte mehrere LED-Chips benötigt. Je mehr Chips dicht neben einander sitzen, umso höher wird jedoch auch der thermische Aufwand sowie der Aufwand zur Kontaktierung der LED-Chips. Ein Modul mit etwa 14 bis 15 eng nebeneinander angeordneten Chips wäre nach heutigem technischen Stand mit sehr hohem Kühlungsaufwand verbunden und zudem lichttechnisch schwierig handhabbar. Das bekannte LED-Multi-Funktions-Modul von Automotive Lighting setzt daher nur vier LED-Chips ein. Eine höhere LED-Dichte ist nicht bekannt.

Das zur Erzeugung eines Fernlichts mit einem LED-Multi-Funktions-Modul erforderliche breite Ergänzungsfernlicht oder Fernlicht-Grundlicht (vgl. Figur 3 unten) wird in der Regel aus einem zweiten Modul erzeugt. Das LED-Multi-Funktions-Modul erzeugt die spotartige Lichtverteilung als Fernlicht für die Reichweite. Die Spotverteilung hat eine vertikale Hell-/ Dunkelgrenze als Teilfernlicht bei Gegenverkehr. Das Grundlicht-Modul erzeugt ein quasisymmetrisches Fernlicht-Grundlicht 40 zur Ergänzung bei voller Fernlichtfunktionalität.

### - Markierungslicht

Durch einen zusätzlichen Schlitz in den Xenon- bzw. LED-Bi-Funktions-Modulen ist auch ein einziger hell ausgeleuchteter vertikaler Streifen oberhalb der Abblendlicht-Hell-/ Dunkelgrenze pro Modul erzeugbar. Dieser hell ausgeleuchtete Streifen kann als sog. Markierungslicht zum gezielten Ausleuchten von auf der Fahrbahn oder daneben vor dem Fahrzeug befindlichen und detektierten Objekten (Personen oder Gegenständen) mit einer fernlicht-ähnlichen Intensität genutzt werden. Der helle Streifen hat eine horizontale Erstreckung von ca. 1° bis 3° auf einem in einem Abstand zu dem Lichtmodul angeordneten senkrechten Messschirm bzw. auf der Fahrbahn und erstreckt sich in vertikaler Richtung bis in die eigentliche Fernlichtregion der Lichtverteilung. Eine Beleuchtungseinrichtung von Automotive Lighting zur Erzeugung eines Markierungslichts ist bspw. aus der DE 20 2010 006 097 U1 bekannt.

Der helle Streifen des Markierungslichts wird aus einem einzelnen Lichtmodul erzeugt oder durch ein kleines separates Reflexionsmodul im Frontbereich des Kraftfahrzeugs, bspw. im Stoßfänger.

### - LED-Modul mit matrixartig angeordneten LED-Lichtquellen (Matrix-Beam)

Dabei wird ein (Spotlicht-) Fernlicht mit einer relativ begrenzten Verteilung (ca. +/- 15°) in einzelne matrixartig angeordnete rechteckige Pixel unterteilt. Diese werden durch einzelne LEDs erzeugt, die in mehreren Zeilen und Spalten matrixartig angeordnet sind und einzeln angesteuert werden können. Damit kann bspw. ein Fernlichtspot mit diskret veränderbarer vertikaler Hell-/ Dunkelgrenze erzeugt werden. Das LED-Matrix-Modul erzeugt eine Spotverteilung eines Fernlichts und ein beliebig anderes Modul, bspw. entsprechend dem oben genannten BiGL-Modul, erzeugt eine Grundverteilung des Fernlichts.

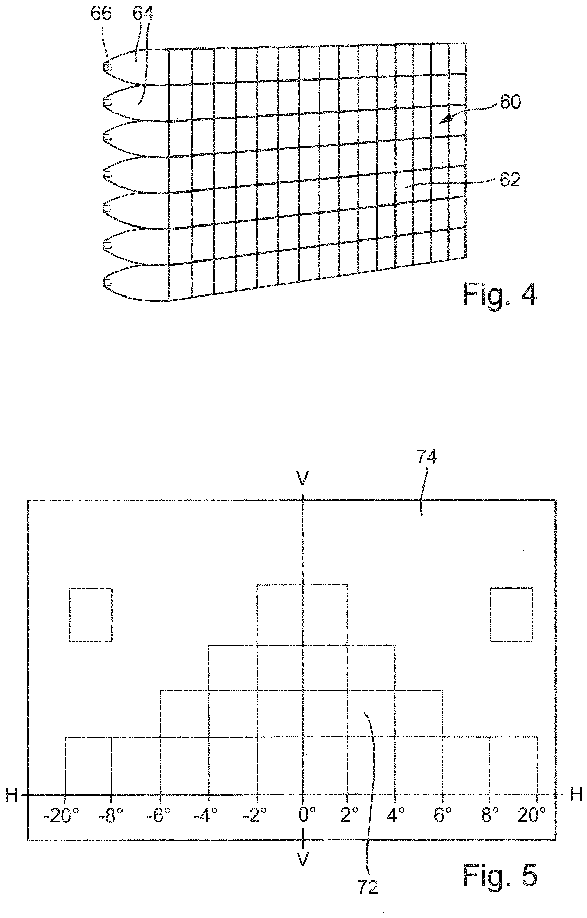

Ein entsprechendes aus der DE 10 2008 013 603 A1 LED-Matrix-Modul ist beispielhaft in Figur 4 gezeigt und in seiner Gesamtheit mit dem Bezugszeichen 60 bezeichnet. Deutlich zu erkennen ist ein Optik-Array 62 des Moduls 60. Das Optik-Array 62 umfasst eine Vielzahl von in mehreren Zeilen und Spalten matrixartig angeordneten trichterförmigen Optikelementen 64, die von den Lichtquellen ausgesandtes Licht bündeln. Jedem der Optikelemente 64 ist mindestens eine LED-Lichtquelle 66 zugeordnet. Die LED-Lichtquelle 66 kann ein LED-Chip oder ein Array mit mehreren matrixartig angeordneten LED-Chips sein. Eine Lichtverteilung 72 des LED-Matrix-Moduls 60, wie sie sich auf einem in einem Abstand zu dem Modul 60 angeordneten senkrechten Messschirm 74 ergeben kann, ist beispielhaft in Figur 5 gezeigt. Es sind deutlich die einzelnen Pixel der Lichtverteilung 72 zu erkennen. Jedes der Pixel wird durch eines der Optikelemente 64 erzeugt. Durch Deaktivieren einzelner LED-Lichtquellen 66 können nicht ausgeleuchtete, d.h. dunkle Pixel der Lichtverteilung 72 erzeugt werden. Ein Lichtmodul bzw. ein Scheinwerfer zur Erzeugung einer entsprechenden Lichtverteilung 72 sind bspw. aus der DE 10 2009 053 581 B3 sowie aus der DE 10 2008 013 603 A1 bekannt.

Derzeit werden in Vorentwicklungsprojektion LED-Matrix-Module mit ca. 80 bis 120 LEDs verwendet. Diese sind in mehreren Zeilen und Spalten matrixartig angeordnet. Bei den derzeitigen Kosten für LEDs, Platinen und vor allem die Verschaltung, Ansteuerung und das Treiber-Steuergerät sowie für die Kühlung der LEDs entstehen bei der bisher bekannten matrixartigen Anordnung ein relativ hoher Aufwand für Entwurf und Fertigung sowie relativ hohe Kosten. Ferner sind die bekannten LED-Matrix-Module relativ groß bauend, was dem Bestreben zuwiderläuft, insbesondere im Frontbereich eines Kraftfahrzeugs den für zusätzliche Aggregate und Funktionalitäten erforderlichen Bauraum zu reduzieren.

Zur Erzeugung von definierten Lichtverteilungen mit horizontal und vertikal begrenzter Ausdehnung (z.B. von Fernlichtstreifen) werden bislang verschiedene Technologien eingesetzt:
- Die Abbildung mit einem Projektionssystem, bei dem die LED-Lichtverteilung über eine Blende (oder einen Schlitz einer Blende) abgebildet wird.
- Die direkte Abbildung einer LED oder eines LED-Arrays mit einer Linse. Vorteil sind die geringe Zahl an Teilen und die relativ kleine Bautiefe solcher Systeme.
- Die Abbildung einer LED oder eines LED-Arrays mit einem Reflexionssystem.

Aus der EP 2 280 215 A2 ist ein Kraftfahrzeugscheinwerfer zur Erzeugung einer dynamischen Fernlicht-Lichtverteilung bekannt. Der Scheinwerfer umfasst mehrere Lichtmodule mit jeweils mehreren LED-Lichtquellen. Die Lichtmodule sind in mehreren Zeilen und Spalten matrixartig in dem Scheinwerfer angeordnet. Die LEDs eines Lichtmoduls erzeugen vertikal und in einem Abstand zueinander angeordnete streifenförmige Segmente der Fernlicht-Lichtverteilung. Die von den Lichtmodulen erzeugten Segmente sind relativ zueinander versetzt, so dass die Segmente des einen Lichtmoduls zwischen den Segmenten eines anderen Lichtmoduls angeordnet sind. Dabei wird das Fernlicht jedoch nicht durch eine Überlagerung eines Spots und eines Grundlichts erzeugt, sondern die gesamt Fernlicht-Lichtverteilung durch die Lichtmodule erzeugt. Ferner ist aufgrund der verschachtelten Anordnung der von den verschiedenen Modulen erzeugten Segmente in der Fernlicht-Lichtverteilung die Anordnung und Ausrichtung der einzelnen LEDs und der Lichtmodule aufwendig.

Aus der EP 2 085 264 A2 ist ein Scheinwerfer bekannt, bei dem das Fernlicht aus einer Überlagerung eines Abblendlichts und einer Fernlicht-Lichtverteilung, die lediglich einen Fernbereich vor dem Kraftfahrzeug oberhalb einer Hell-/ Dunkelgrenze ausleuchtet, erzeugt wird. Die Fernlicht-Lichtverteilung besteht ihrerseits allerdings nicht aus einer Überlagerung einer Spotverteilung und einer Grundverteilung.

Aus der DE 10 2008 044 968 A1 sowie aus der DE 10 2009 020 619 A1 ist ein Fahrzeugscheinwerfer bekannt, der eine LED-Matrix mit mehreren matrixartig in Zeilen und Reihen nebenund übereinander angeordneten LEDs als Lichtquelle aufweist. Durch die LED-Matrix kann eine Lichtverteilung erzeugt werden, die entsprechend der Anordnung der LEDs in der LED-Matrix in eine Vielzahl matrixartig angeordneter Blocksegmente unterteilt ist. Es ist nicht ausdrücklich erwähnt, dass die Lichtverteilung eine Fernlicht-Lichtverteilung ist. Aber, wenn die Lichtverteilung als eine solche betrachtet würde, ergäbe sich diese jedenfalls nicht aus einer Überlagerung einer Spot- und einer Grundverteilung.

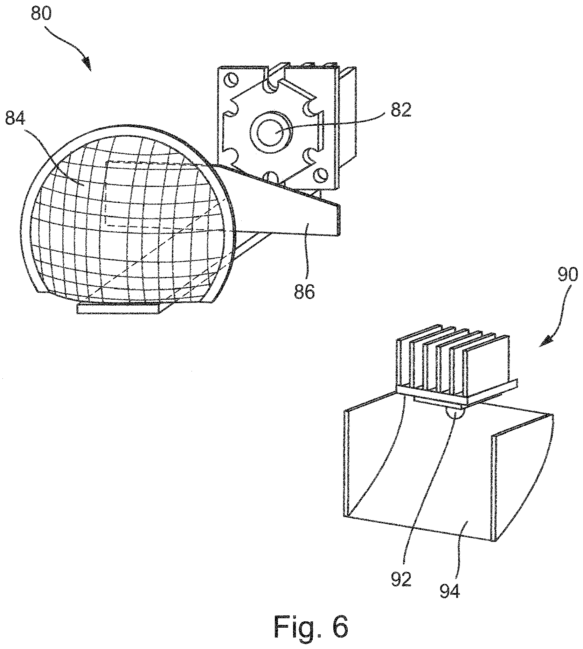

Figur 6 zeigt beispielhaft aus dem Stand der Technik an sich bekannte Lichtmodule. In Figur 6 links ist ein Projektionssystem 80 und rechts ein Reflexionssystem 90 dargestellt. Bei einem Projektionssystem 80 wird das von einer Lichtquelle 82, bspw. einer oder mehreren LEDs, erzeugte Licht durch eine Sekundäroptik 84 zur Erzeugung der gewünschten Lichtverteilung vor das Fahrzeug projiziert. Zur Erzeugung einer abgeblendeten Lichtverteilung kann im Strahlengang in der Brennebene der Sekundäroptik 84 eine Kante einer Blendenanordnung 86 positioniert werden, wobei die Sekundäroptik 84 das an der Blendenanordnung 86 vorbei gelangte Licht und die Kante zur Erzeugung der Hell-/ Dunkelgrenze vor dem Fahrzeug abbildet. Die Blendenanordnung 86 kann - wie in Figur 6 gezeigt - vertikal oder aber auch in beliebig anderer Ausrichtung, bspw. horizontal, ausgerichtet sein. Das von der oder den Lichtquellen 82 ausgesandte Licht kann mittels einer Primäroptik (nicht dargestellt) gebündelt werden. Die Primäroptik ist bspw. als eine TIR (total internal reflection)-Vorsatzoptik aus transparentem Material mit einer Brechzahl n>1, bspw. organischem oder anorganischem Glas, insbesondere PMMA oder Silikon, ausgebildet. Eine TIR-Vorsatzoptik bündelt hindurchtretendes Licht durch Brechung an Lichteintritts- und/oder Lichtaustrittsflächen sowie durch Totalreflexion an seitlichen Grenzflächen. Die Sekundäroptik 84 kann - wie in Figur 6 gezeigt - als eine Projektionslinse oder aber als ein Reflektor (nicht dargestellt) ausgebildet sein.

Bei einem Reflexionssystem 90 wird die gewünschte Lichtverteilung durch Reflexion des von der oder den Lichtquellen 92 erzeugten Lichts an einer Reflexionsfläche 94 vor das Fahrzeug reflektiert.

### - Lichtbildende Elemente

Aus dem Stand der Technik sind verschiedene Maßnahmen und unterschiedlich ausgestaltete Vorsatzoptiken bekannt, um eine Winkelapertur eines Lichtbündels zu verändern. Derartige Vorsatzoptiken werden auch als Querschnittswandler oder Optokommutator bezeichnet.

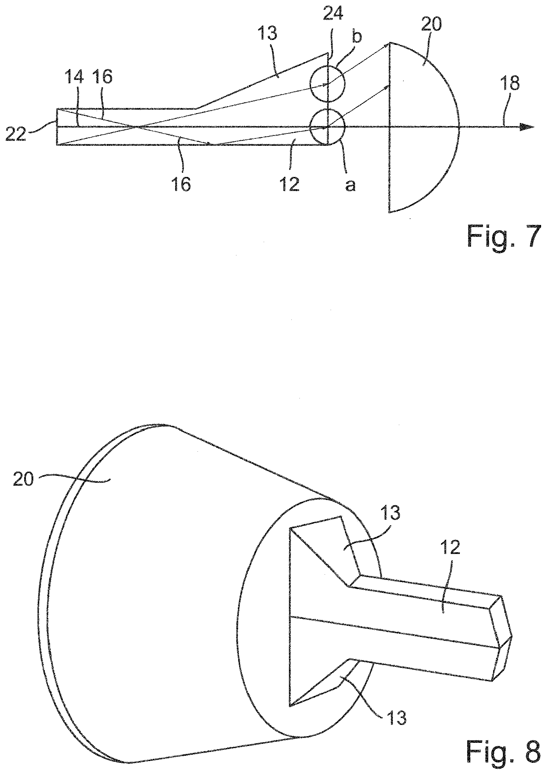

Als Beispiel werden die aus der DE 102 52 228 A1 bekannten Optokommutatoren angeführt. Figur 7 zeigt die Fig. 2 der DE 102 52 228 A1 und Figur 8 die Fig. 4b dieser Druckschrift, wobei sich die in den Figuren 7 und 8 angegebenen Bezugszeichen auf die Druckschrift beziehen. Das in dieser Druckschrift beschriebene System ist relativ kompakt, bietet allerdings keine horizontalen oder vertikalen Unterteilungen der Lichtverteilung und erzeugt entweder ein vollständiges Abblendlicht oder ein vollständiges Fernlicht. Eine Unterteilung des Fernlichts in einen Spot und ein Grundlicht ist nicht erwähnt. Die erzeugte Lichtverteilung (Abblendlicht bzw. Fernlicht) wird mittels einer Projektionslinse (Bezugszeichen 20 in den Figuren 7 und 8) abgebildet.

Ein weiteres Beispiel sind die aus der DE 103 02 969 A1 bekannten Optokommutatoren, die eine Weiterentwicklung der aus der DE 102 52 228 A1 bekannten Optokommutatoren darstellen. Dabei werden in dem Optokommutator weitere reflektierende Flächen definiert, die eine Lichtbeeinflussung sehr effizient zulassen. Figur 9 zeigt die Fig. 2 der DE 103 02 969 A1 und Figur 10 die Fig. 5b dieser Druckschrift, wobei sich die in den Figuren 9 und 10 angegebenen Bezugszeichen auf die Druckschrift beziehen. Auch bei dem in dieser Druckschrift offenbarten System dient der Optokommutator zur Erzeugung einer kompletten Lichtfunktion. Eine Unterteilung von Fernlicht in einen Spot und ein Grundlicht ist nicht erwähnt.

Weitere Veröffentlichungen zu Optokommutatoren sind bspw. die DE 10 2005 017 528 A1, die DE 10 2009 053 581 B3, die DE 10 2008 013 603 A1 sowie die DE 102 04 481 A1.

Besonders hervorzuheben ist die DE 10 2009 053 581 B3, von der in Figur 11 die Fig. 5 gezeigt ist, wobei sich die in dieser Figur angegebenen Bezugszeichen auf die Druckschrift beziehen. In dieser Druckschrift wird vorgeschlagen, den Optokommutator in kleinere Optikelemente zu unterteilen, die zu einem Optik-Array zusammengefasst sind. Charakteristisch bleibt zunächst, dass das Optik-Array immer mehrere Zeilen aufweist und die einzelnen Optikelemente des Arrays eine quadratische bzw. rechteckige Fläche aufweisen.

Ausgehend von dem beschriebenen Stand der Technik soll die vorliegende Erfindung eine kameragesteuerte Lichtfunktion ermöglichen, die entgegenkommende und vorausfahrende Fahrzeuge nicht blendet, aber in der Rest-Lichtverteilung ein Fernlicht für den Fahrer darstellt und so eine optimale Ausleuchtung der Fahrbahn und der seitlichen Bereiche vor dem Fahrzeug ermöglicht. Die Aufgabe der Erfindung ist es also, ein voll funktionsfähiges, einfach und kostengünstig realisierbares Lichtmodul zur Realisierung einer Spotverteilung einer Fernlicht-Lichtverteilung vorzuschlagen.

Diese Aufgabe wird mit der Summe der Merkmale des Anspruchs 1 gelöst. Ausgehend von dem Lichtmodul der eingangs genannten Art wird unter anderem vorgeschlagen, dass das Spotlicht-Lichtmodul in mehrere separat ansteuerbare Unter-Module unterteilt ist, die mehrere streifenförmige Segmente der Spotverteilung erzeugen, wobei sich die streifenförmigen Segmente zu der Spotverteilung ergänzen.

Die streifenförmigen Segmente weisen eine vertikale Orientierung auf.

Das mit dem erfindungsgemäßen Scheinwerfer erzeugte Fernlicht umfasst eine konzentrierte Spotverteilung (bspw. der Art wie in Figur 3 oben dargestellt) und eine breitere Grundverteilung (bspw. der Art wie in Figur 3 unten dargestellt). Eine Überlagerung von Spot und Grundlicht ergibt das gewünschte Fernlicht. Dabei kann das Grundlicht auf eine beliebige Weise erzeugt werden. Das Grundlicht ist erfindungsgemäß in verschiedene Blocksegmente unterteilt. Die einzelnen Blocksegmente ergänzen sich zu der Grundverteilung. Die Blocksegmente können einzeln aktiviert bzw. deaktiviert werden. Insbesondere werden während der Erzeugung eines Fernlichts diejenigen Blocksegmente des Grundlichts deaktiviert, die in einer Zone liegen würden, in der ein anderer Verkehrsteilnehmer detektiert worden ist. Falls das Grundlicht nur als ganzes aktiviert bzw. deaktiviert werden kann, könnte nach Detektion eines anderen Verkehrsteilnehmers in einer Zone vor dem Kraftfahrzeug einfach des gesamte Grundlicht-Modul ausgeschaltet werden, um eine Blendung des Verkehrsteilnehmers zu verhindern.

Als Fernlicht-Lichtverteilung wird insbesondere eine Lichtverteilung verstanden, welche einen Bereich vor dem Fahrzeug oberhalb einer horizontalen Hell-/ Dunkelgrenze einer abgeblendeten Lichtverteilung ausleuchtet. Bei gleichzeitiger Aktivierung der Fernlicht-Lichtverteilung zusammen mit der abgeblendeten Lichtverteilung ergibt sich ein den gesetzlichen Anforderungen entsprechendes Fernlicht. Das Zusammensetzen des Fernlichts aus einer abgeblendeten Lichtverteilung und einer Fernlicht-Lichtverteilung kann zur Erzielung einer möglichst hohen Variabilität der Lichtverteilung vorteilhaft sein. Ferner können auf diese Weise die hohen Werte für den Lichtstrom des Fernlichts besonders einfach und kostengünstig realisiert werden.

Als Fernlicht-Lichtverteilung im Sinne der vorliegenden Erfindung wird aber auch ein Fernlicht verstanden, das ohne ein zusätzliches Lichtbündel unterhalb der Hell-/ Dunkelgrenze, bspw. eine abgeblendete Lichtverteilung, die gesetzlichen Anforderungen an das Fernlicht nach ECE erfüllt. Auch eine solche Fernlicht-Lichtverteilung ist jedoch aus einer Überlagerung einer Spotverteilung und einer Grundverteilung zusammengesetzt. Erfindungsgemäß erstreckt sich die Spotverteilung unterhalb der Horizontalen bzw. unterhalb der Hell-/ Dunkelgrenze einer abgeblendeten Lichtverteilung. Bei Fernlicht nach SAE muss das Fernlicht auch in Messpunkte unterhalb der Horizontalen bestimmte Mindest- bzw. maximale Beleuchtungsstärkewerte erfüllen.

Erfindungsgemäß ist das Lichtmodul in mehrere Unter-Module unterteilt, die jeweils mindestens eine Lichtquelle zum Aussenden von Licht umfassen. Die Lichtquellen sind vorzugsweise als Halbleiterlichtquellen, insbesondere als LEDs, ausgebildet. Ferner umfasst jedes der Unter-Module mindestens ein Optikelement zum Bündeln des von den Lichtquellen ausgesandten Lichts. Jedem Optikelement ist mindestens eine der Lichtquellen zugeordnet. Das Optikelement kann als eine TIR (Total Internal Reflection)-Optik (z.B. Vorsatzoptik) aus einem transparenten Material mit einer Brechzahl n>1, bspw. PMMA, PC oder Silikon, ausgebildet sein. Es ist aber auch denkbar, dass das Optikelement als ein offener Kollimator (z.B. herkömmlicher Reflektor) ausgebildet ist. Das von den Unter-Modulen erzeugte und gebündelte Licht kann dann durch eine im Strahlengang angeordnete Sekundäroptik gelangen, welche die einzelnen Lichtbündel der Unter-Module vor dem Fahrzeug als streifenförmige Segmente abbildet. Die Sekundäroptik kann bspw. als eine Projektionslinse oder als ein Reflektor ausgebildet sein. Es ist ferner denkbar, dass die Sekundäroptik in mehrere Teiloptiken unterteilt ist, wobei jeweils eine Teiloptik einer oder einer Gruppe von Unter-Modulen zugeordnet ist.

Anders als bei dem bisher bekannten Matrix-Beam, ist bei der vorliegenden Erfindung die Spotverteilung nicht in matrixartig neben- und übereinander angeordnete, quadratische Segmente, sondern lediglich in mehrere in einer einzigen Zeile nebeneinander angeordnete streifenförmige Segmente mit jeweils im Wesentlichen vertikaler Längserstreckung unterteilt. Der Fernlichtspot ist also in Streifen mit vertikaler Hell-/ Dunkelgrenze unterteilt.

Diese Streifen können durch nebeneinander angeordnete, bspw. aneinander gekoppelte, Vorsatzoptiken der Unter-Module erzeugt werden, die das von den Lichtquellen ausgesandte Licht bündeln, und mit der Sekundäroptik vor das Fahrzeug projiziert. Dadurch entsteht eine Lichtverteilung, die wenn alle Streifen aktiviert oder gedimmt betrieben sind, einer üblichen Fernlicht-Spotverteilung entspricht. Durch An- bzw. Abschalten einzelner LEDs bzw. durch Aktivieren bzw. Deaktivieren einzelner Streifen ist die Realisierung eines Teilfernlichts oder eines Markierungslichts möglich. Die vertikalen Hell-/ Dunkelgrenzen sind zwischen gemeinsam aktivierten Segmenten kaum sichtbar.

Die Unter-Module sind vorzugsweise in genau einer Zeile nebeneinander in dem Lichtmodul angeordnet. Es ist somit nur noch eine Zeile mit nebeneinander angeordneten Lichtquellen sowie ein im Strahlengang des von den Lichtquellen ausgesandten Lichts angeordnetes lineares Optik-Array mit mehreren in einer Zeile nebeneinander angeordneten Optikelementen erforderlich. Dadurch wird die elektrische Kontaktierung und Kühlung der Lichtquellen der Unter-Module wesentlich vereinfacht. Außerdem wird die Positionierung und Befestigung des Optik-Arrays vor den Lichtquellen wesentlich vereinfacht, insbesondere wenn die Optikelemente des Optik-Arrays aus einem biegeschlaffen Material, wie bspw. Silikon, gefertigt sind. Eine Justage einzelner Optikelemente relativ zu der oder den ihnen zugeordneten Lichtquellen ist möglich, da in einer Zeile angeordnete Optikelemente von zwei Seiten von außen ergriffen und justiert werden können. Zudem ist das erfindungsgemäße Lichtmodul besonders kleinbauend und leicht. Es wird bewusst der Nachteil in Kauf genommen, dass die Spotverteilung nicht mehr so fein unterteilt und zur Anpassung an das Verkehrsgeschehen im Umfeld des Kraftfahrzeugs so fein variiert werden kann, wie dies bspw. bei den bekannten LED-Matrix-Beams möglich ist, um die angegebenen Vorteile des erfindungsgemäßen Lichtmoduls zu erzielen. Die Reihenfolge der streifenförmigen Segmente in der Spotverteilung entspricht der Reihenfolge der Unter-Module in dem Lichtmodul, d.h. nebeneinander angeordnete Unter-Module erzeugen in der Lichtverteilung nebeneinander angeordnete streifenförmige Segmente.

Jedes Optikelement des linearen Optik-Arrays weist mindestens eine der oder den dem Optikelement zugeordneten Lichtquellen zugewandte Lichteintrittsfläche auf, über die von der oder den Lichtquellen ausgesandtes Licht in das Optikelement eingekoppelt wird. Die Seitenwände eines Optikelements sind vorzugsweise als Licht reflektierende Flächen ausgebildet, bspw. als totalreflektierende Grenzflächen einer TIR-Vorsatzoptik aus transparentem Material mit einer Brechzahl n>1 oder als Spiegelflächen eines Reflektors, um zumindest den größten Teil des eingekoppelten Lichts zu reflektieren. Ferner weist jedes Optikelement mindestens eine, vorzugsweise der mindestens einen Lichteintrittsfläche gegenüberliegende Lichtaustrittsfläche auf, über die zumindest ein Teil des eingekoppelten Lichts, gegebenenfalls nach einer oder mehreren Reflexion an den Seitenflächen, ausgekoppelt wird. Die Austrittsflächen sind bei im Kraftfahrzeug bestimmungsgemäß eingebautem Lichtmodul höher als breit, insbesondere sind sie streifenförmig mit einer im Wesentlichen vertikalen Längserstreckung ausgebildet. Die Optikelemente weiten sich ausgehend von der oder den Lichteintrittsflächen bis zu der oder den Lichtaustrittsflächen trichterförmig auf, so dass zumindest eine der Seitenwände des Optikelements schräg zu einer Längsachse des Optikelements verläuft. Die Seitenwände können eben oder konkav oder konvex gewölbt ausgebildet sein.

Durch die spezielle Form der Optikelemente führen sie zu einem Aufweiten der Pixel bzw. der Lichtaustrittsfläche der Unter-Module in vertikaler Richtung. Dadurch ergibt sich zwangsläufig eine stärkere Bündelung des aus den Unter-Modulen austretenden Lichts. Das heißt, die Lichtbündel einzelner Unter-Module treffen stärker gebündelt auf eine im Strahlgang angeordnete Sekundäroptik. Diese kann somit kleiner dimensioniert werden, als dies bei einem herkömmlichen LED-Matrix-Beam möglich wäre. Für eine als Projektionslinse ausgebildete Sekundäroptik bedeutet dies, dass die Linsendurchtrittsfläche, durch die die Lichtbündel der Unter-Module hindurchtreten, insbesondere vertikal kleiner ist. Insbesondere tritt kein bzw. viel weniger Licht durch die oberen und unteren Ränder der Linse. Da die Ränder einer Linse verantwortlich sind für die Entstehung eines Farbsaums in der Abbildung, kann durch die vorliegende Erfindung der Farbsaum der Spotverteilung signifikant verringert bzw. sogar nahezu beseitigt werden. Zudem ist es denkbar, die Projektionslinse an den oberen und unteren Rändern abzuflachen, d.h. die oberen und unteren Randbereiche, durch die aufgrund der stärkeren Lichtbündelung kein oder nur sehr wenig Licht hindurchtritt, zu entfernen, um so zu einer besonders flach bauenden Sekundäroptik zu gelangen. Alternativ wäre es auch denkbar, den Durchmesser der gesamten Linse zu verringern. Dadurch kann der für das Lichtmodul erforderliche Bauraum sowie das Gewicht des Lichtmoduls deutlich verringert werden. Da die Projektionslinse in der Regel von außerhalb des Scheinwerfers durch die Abdeckscheibe hindurch zu erkennen ist und maßgeblich die ästhetische Wirkung des Scheinwerfers bzw. sogar der gesamten Frontansicht des Fahrzeugs auf einen Betrachter bestimmt, können sich durch eine Linse, die flach und breit, d.h. breiter als hoch, ausgestaltet ist, neue Designaspekte für ein Lichtmodul bzw. den gesamten Scheinwerfer ergeben. Dies alles ist möglich, ohne dass von den Lichtquellen ausgesandtes Licht verloren geht und sich der Wirkungsgrad bzw. die Effizienz des Lichtmoduls verschlechtert.

Gemäß einer vorteilhaften Weiterbildung der Erfindung wird vorgeschlagen, dass die Unter-Module jeweils mindestens eine Lichtquelle aufweisen, und dass während des Betriebs des Lichtmoduls die mindestens eine Lichtquelle mindestens desjenigen Unter-Moduls deaktiviert ist, dessen streifenförmiges Segment in einer Zone liegen würde, in der ein anderer Verkehrsteilnehmer detektiert wurde. Zur Detektion anderer Verkehrsteilnehmer, insbesondere von vorausfahrenden und entgegenkommenden Fahrzeugen, kann das Kraftfahrzeug im Frontbereich mit einer Kameraanordnung ausgestattet sein, die bspw. hinter der Windschutzscheibe, insbesondere zwischen einem Innenrückspiegel und der Scheibe, angeordnet ist. Die von der Kamera aufgenommen Bilder des Bereichs vor dem Fahrzeug werden durch eine geeignete Bildverarbeitungseinheit mit dem Ziel verarbeitet, auf den Bildern dargestellte Verkehrsteilnehmer zu detektieren und deren Position zu ermitteln. Die Bildverarbeitungseinrichtung kann ein entsprechendes Ansteuersignal an das Lichtmodul zur Ansteuerung der Lichtquellen der Unter-Module senden, so dass eine Blendung der detektierten anderen Verkehrsteilnehmer verhindert wird.

Die streifenförmigen Segmente sind in der Spotverteilung vorzugsweise vertikal ausgerichtet. Gemäß einer bevorzugten Ausführungsform beträgt ein Verhältnis von Länge der streifenförmigen Segmente zu deren Breite mindestens 3:1, vorzugsweise bis zu 10:1. Die Breite der einzelnen streifenförmigen Segmente auf einem in einem Abstand vor dem Lichtmodul angeordneten senkrechten Messschirm beträgt vorzugsweise etwa 1° bis 3°, vorzugsweise 1° bis 1,5°. Damit ergibt sich unter Berücksichtigung des obigen Höhezu-Breite-Verhältnisses eine Höhe der streifenförmigen Segmente von vorzugsweise etwa 3° bis 20°, vorzugsweise von 5° bis 15°, besonders bevorzugt von 5° bis 8°. Die Höhe wird dabei vorzugsweise ausgehend von einer horizontalen Hell-/ Dunkelgrenze einer abgeblendeten Lichtverteilung gemessen. Es ist aber auch denkbar, dass sich die streifenförmigen Segmente der Spotverteilung nach unten bis in einen Abblendlichtbereich unterhalb der horizontalen Hell-/ Dunkelgrenze hinein erstrecken.

Die einzelnen Streifen der Fernlicht-Spotverteilung haben ein Beleuchtungsstärke-Maximum von >60 Lux (lx), vorzugsweise von 80 lx bis 120 lx. Dies gilt insbesondere für die zentralen Segmente der Spotverteilung in der Nähe einer Vertikalen. Die äußeren Segmente in den Randbereichen der Lichtverteilung haben eine demgegenüber geringere maximale Beleuchtungsstärke von etwa 30 lx bis 50 lx. Die Ausleuchtung der Segmente nach oben kann in der Beleuchtungsstärke abfallen, in der (geringen) horizontalen Ausdehnung soll die Beleuchtungsstärke nach Möglichkeit gleich (also homogen) sein.

Die horizontale Ausdehnung der durch die streifenförmigen Segmente gebildeten Spotverteilung beträgt vorzugsweise maximal +/-20° und mindestens +/-5°. Besonders bevorzugt ist es, wenn das Spotlicht eine Breite von minimal +/-5° und maximal +/-10° hat. In dem gesamten Bereich der Spotverteilung können einzelne Segmente oder Segmentgruppen durch Aktivieren bzw. Deaktivieren der Lichtquellen der entsprechenden Unter-Module gezielt zu- bzw. abgeschaltet werden. Die Lichtverteilung ist vorzugsweise so ausgebildet, dass - anders als bei einem bekannten Xenon-Bi-Funktions-Modul - kein zusätzliches mechanisches Verschwenken des Lichtmoduls in horizontaler Richtung (z.B. durch die Mechanik eines mechanischen Kurvenlichts) erforderlich ist, um die jeweiligen Positionen von anderen Verkehrsteilnehmern vor dem Kraftfahrzeug auszublenden.

Mit der vorliegenden Erfindung werden die in dem eingangs genannten Stand der Technik beschriebenen Optokommutatoren weiterentwickelt. Die DE 102 52 228 A1 und die DE 103 02 969 A1 beziehen sich auf Optokommutatoren, die keine vertikale Unterteilung aufweisen und von einer breiten Lichtquelle (LED-Array oder Lichtleiter mit Xenon/Glühlampeneinkopplung) gespeist werden.

Anders als in der DE 10 2009 053 581 B3 beschrieben, verwendet die Erfindung keine einzelnen ca. 1° x 1° oder 1,2° x 1° großen Pixel, sondern vertikale Streifen. Die Streifen könnten bei dem bekannten Lichtmodul zwar durch vertikal zusammengeschaltete Pixel aus dem Optik-Array erzeugt werden. Das würde aber unverhältnismäßig hohe Kosten und Aufwand bei den verwendeten LEDs, der Verschaltung, der Ansteuerung und der Kühlung verursachen.

Die einzelnen nebeneinander angeordneten Einkoppelelemente für die Optokommutatoren des erfindungsgemäßen Lichtmoduls können unterschiedlich ausgestaltet sein. So können z.B. die mittleren Streifen mit einer veränderten Außenfläche zur Lichtleitung gestaltet sein, um die Effizienz zu verbessern und noch höhere Beleuchtungsstärke-Maxima zu ermöglichen. Ferner ist es denkbar, dass die Höhe der Austrittsflächen der einzelnen Optokommutator-Elemente zum Rand hin abnimmt, so dass die Höhe der streifenförmigen Segmente zum Rand hin ebenfalls abnimmt. Die Optokommutatoren werden vorzugsweise jeweils von mindestens einer individuell ansteuerbaren Halbleiterlichtquelle, vorzugsweise in Form einer Leuchtdiode (LED), gespeist. Selbstverständlich ist auch die Verwendung mehrerer LEDs je Optokommutator-Element des linearen Optik-Arrays denkbar. Es ist denkbar in einem solchen Fall die einzelnen LEDs, die alle dem gleichen Optokommutator-Element zugeordnet sind, separat ansteuerbar auszugestalten, um bspw. die einzelnen streifenförmigen Segmente nicht nur ein- und ausschalten, sondern auch dimmen zu können.

Das erfindungsgemäße Lichtmodul weist - wie gesagt - mehrere in genau einer Zeile nebeneinander angeordnete Halbleiterlichtquellen auf, die sichtbares Licht aussenden. Im Strahlengang der Halbleiterlichtquellen ist eine Primäroptik angeordnet, die als ein lineares Optik-Array mit mehreren in genau einer Zeile nebeneinander angeordneten optisch wirksamen Elementen (den Optokommutator-Elementen) ausgestaltet ist und die das von den Halbleiterlichtquellen ausgesandte Licht bündelt. Im weiteren Verlauf des Strahlengangs ist mindestens eine Sekundäroptik angeordnet, welche die Lichtbündel zur Erzielung der Fernlicht-Spotverteilung vor dem Kraftfahrzeug abbildet. Gemäß einer bevorzugten Weiterbildung der Erfindung wird vorgeschlagen, dass die Primäroptik außer dem linearen Optik-Array mit den optisch wirksamen Elementen im Strahlengang nach dem Optik-Array angeordnete zusätzliche optisch wirksame Austrittsoptiken aufweist. Jedem der optisch wirksamen Elemente sind mehrere Austrittsoptiken zugeordnet, nämlich zum einen eine Hauptaustrittsoptik mit sammelnden Eigenschaften auf der optischen Achse des optisch wirksamen Elements und zum anderen neben der Hauptaustrittsoptik mindestens eine Nebenaustrittsoptik. Ein Großteil des durch eines der optisch wirksamen Elemente gebündelten Lichts tritt durch die dem optisch wirksamen Element zugeordnete Hauptaustrittsoptik und das übrige durch das optisch wirksame Element gebündelte Licht tritt durch eine oder mehrere dem optisch wirksamen Element zugeordnete Nebenaustrittsoptiken hindurch. Diese Weiterbildung hat den Vorteil, dass trotz der Segmentierung der Spotverteilung eine besonders homogene Lichtverteilung ohne unerwünschte ausgeprägte Intensitätsmaxima oder -minima erzeugt werden kann. Dies wird insbesondere dadurch erzielt, dass nach außen gerichtete Lichtstrahlen durch die gewölbten Austrittsoptiken noch weiter nach außen abgelenkt werden, so dass sie nicht durch die Sekundäroptik hindurchtreten und nicht zur Erzeugung der Lichtverteilung beitragen. Dieses Prinzip ist im Detail in der DE 10 2009 053 581 B3 beschrieben, wird vorliegend aber erstmals in Verbindung mit dem erfindungsgemäßen Lichtmodul eingesetzt. Das Prinzip ist in Verbindung mit der vorliegenden Erfindung besonders vorteilhaft, da die Fernlicht-Spotverteilung in weniger und größere Segmente unterteilt wird als bei einem bekannten LED-Matrix-Beam, so dass Intensitätsmaxima zwischen den einzelnen Segmenten deutlicher und ausgeprägter sichtbar wären.

Das erfindungsgemäße Lichtmodul kann an einer beliebigen Stelle im Frontbereich eines Kraftfahrzeugs angeordnet sein. Vorzugsweise ist das Lichtmodul jedoch Bestandteil eines Kraftfahrzeugscheinwerfers.

Außer dem Spotlicht-Modul kann im Frontbereich des Kraftfahrzeugs auch noch mindestens ein weiteres Lichtmodul zur Erzeugung einer Grundverteilung angeordnet sein, wobei sich aus einer Überlagerung der Spotverteilung und der Grundverteilung eine Fernlicht-Lichtverteilung ergibt. Vorzugsweise ist das Grundlicht-Modul ebenfalls in dem Scheinwerfer angeordnet. Gemäß einer vorteilhaften Weiterbildung des erfindungsgemäßen Kraftfahrzeugscheinwerfers ist die Ansteuerung der Lichtquellen der Unter-Module auf die Ansteuerung des Grundlicht-Moduls abgestimmt, so dass zeitgleich mit einer Deaktivierung zumindest desjenigen Teils der Grundverteilung, der in der Zone liegen würde, in der ein anderer Verkehrsteilnehmer detektiert wurde, die mindestens eine Lichtquelle des mindestens einen zu deaktivierenden Unter-Moduls deaktiviert wird. Auf diese Weise kann trotz des vereinfachten Aufbaus des erfindungsgemäßen Scheinwerfers sichergestellt werden, dass der Bereich vor dem Kraftfahrzeug stets optimal (d.h. so großflächig wie möglich) ausgeleuchtet wird und gleichzeitig eine Blendung anderer Verkehrsteilnehmer verhindert wird.

Schließlich betrifft die Erfindung auch eine Scheinwerferanlage eines Kraftfahrzeugs, die zwei in einem Frontbereich des Fahrzeugs zueinander beabstandet angeordnete erfindungsgemäße Kraftfahrzeugscheinwerfer umfasst. Es wird vorgeschlagen, dass einer der beiden Scheinwerfer ein Lichtmodul umfasst, das die streifenförmigen Segmente einer linken Seite der Spotverteilung erzeugt, und der andere Scheinwerfer ein Lichtmodul umfasst, das die streifenförmigen Segmente einer rechten Seite der Spotverteilung erzeugt, so dass sich die streifenförmigen Segmente der Lichtmodule der beiden Scheinwerfer zu der gesamten Spotverteilung ergänzen oder zumindest teilweise überlagern.

Erfindungsgemäß erzeugen also die Lichtmodule des linken und des rechten Scheinwerfers eines Kraftfahrzeugs unterschiedliche Lichtverteilungen. Wenn bspw. die Scheinwerferanlage eines Fahrzeugs eine Spotverteilung erzeugt, die in eine bestimmte Anzahl (z.B. 24) an streifenförmigen Segmenten unterteilt ist, weisen die Lichtmodule jeweils maximal die gleiche Anzahl (z.B. 24) an Unter-Modulen auf. Dann würden sich in der von der Scheinwerferanlage erzeugten Spotverteilung die von den einzelnen Scheinwerfern jeweils erzeugten Teil-Lichtverteilungen vollständig überlagern, d.h. jedes Segment der von der Scheinwerferanlage erzeugten Spotverteilung bestände dann aus einer Überlagerung eines entsprechenden von dem linken Scheinwerfer erzeugten Segments mit einem entsprechenden von dem rechten Scheinwerfer erzeugten Segment. Bei der von der Scheinwerferanlage erzeugten Spotverteilung mit einer bestimmten Anzahl (z.B. 24) an streifenförmigen Segmenten weisen die Lichtmodule jeweils mindestens die halbe Anzahl (z.B. 12) an Unter-Modulen auf. In diesem Fall wären in dem durch die Scheinwerferanlage erzeugten Fernlichtspot die von den beiden Scheinwerfern jeweils erzeugten Teil-Lichtverteilungen nebeneinander angeordnet, d.h. die beiden Teil-Lichtverteilungen würden sich zu der Spotverteilung ergänzen. Jedes Segment der Spotverteilung würde durch lediglich ein von einem der Scheinwerfer erzeugtes Segment im Wesentlichen ohne Überlagerung durch andere Segmente gebildet werden.

Als weitere Möglichkeit wäre es auch denkbar, dass die Scheinwerfer eine bestimmte Anzahl an Unter-Modulen umfassen, die zwischen der minimalen und der maximalen Anzahl liegt. In diesem Fall würden sich die durch die einzelnen Scheinwerfer erzeugten Teil-Lichtverteilungen lediglich teilweise, im zentralen Bereich der Spotverteilung, überlagern. Die zentralen Segmente der Spotverteilung würden also durch eine Überlagerung der von den beiden Scheinwerfern erzeugten Segmente gebildet, während die äußeren Segmente der Spotverteilung jeweils durch lediglich ein von einem der Scheinwerfer erzeugtes Segment ohne Überlagerung durch andere Segmente gebildet werden. Eine zumindest teilweise Überlagerung der Teil-Lichtverteilungen in der Spotverteilung hätte den Vorteil, dass die Lichtmodule in den Scheinwerfern mit weniger Unter-Modulen realisiert werden könnten und dadurch kleiner, leichter und kostensparender werden. Allerdings müssten dann die einzelnen Unter-Module einen größeren Lichtstrom abstrahlen und eine größere Lichtstärke erzeugen, um die gesetzlichen Vorgaben bzw. Kundenspezifikationen an die minimalen Intensitätswerte der Spotverteilung bzw. des Fernlichts erfüllen zu können.

Es ist ferner denkbar, dass die Lichtmodule in den Scheinwerfern (relativ zu einem Scheinwerfergehäuse) bzw. die Scheinwerfer selbst (relativ zur Fahrzeugkarosserie) unabhängig voneinander horizontal verschwenkbar ausgebildet sind, um bspw. den Grad der Überlagerung der von den beiden Scheinwerfern erzeugten Teil-Lichtverteilungen in der resultierenden Spotverteilung variieren zu können. Ferner wäre es denkbar, durch das horizontale Verschwenken der Lichtmodule bzw. der Scheinwerfer eine Kurvenlichtfunktion zu realisieren. Dabei kann das Grundlicht weiter konstant geradeaus gerichtet sein, so dass die Kurvenlichtfunktion lediglich durch Bewegen eines Teils des Fernlichts, nämlich den Fernlichtspot, realisiert wird.

Weitere Merkmale und Vorteile der vorliegenden Erfindung werden nachfolgend unter Bezugnahme auf die Figuren näher erläutert. Unabhängig von der dargestellten und/oder beschriebenen Kombination der Merkmale kann die vorliegende Erfindung die angegebenen Merkmale auch in einer beliebig anderen Kombination aufweisen. Es zeigen:
- Figur 1: einen Teil einer von einem aus dem Stand der Technik bekannten Lichtmodul bzw. Scheinwerfer erzeugten Teil-Fernlichtlichtverteilung;
- Figur 2: eine aus dem Stand der Technik bekannte Teil-Fernlichtlichtverteilung;
- Figur 3 oben: eine von einem aus dem Stand der Technik bekannten LED-Spotlicht-Modul erzeugte Spotverteilung einer Fernlicht-Lichtverteilung;
- Figur 3 unten: eine von einem beliebigen aus dem Stand der Technik bekannten Lichtmodul erzeugte Grundverteilung;
- Figur 4: ein aus der DE 10 2008 013 603 A1 bekanntes Optik-Array in einer perspektivischen Ansicht;
- Figur 5: eine mittels eines aus dem Stand der Technik nach DE 10 2009 053 581 B3 bekannten LED-Matrix-Moduls erzeugte Spotverteilung einer Fernlicht-Lichtverteilung;
- Figur 6: verschiedene aus dem Stand der Technik bekannte Lichtmodule;
- Figur 7: Fig. 2 der DE 102 52 228 A1 ;
- Figur 8: Fig. 4b der DE 102 52 228 A1 ;

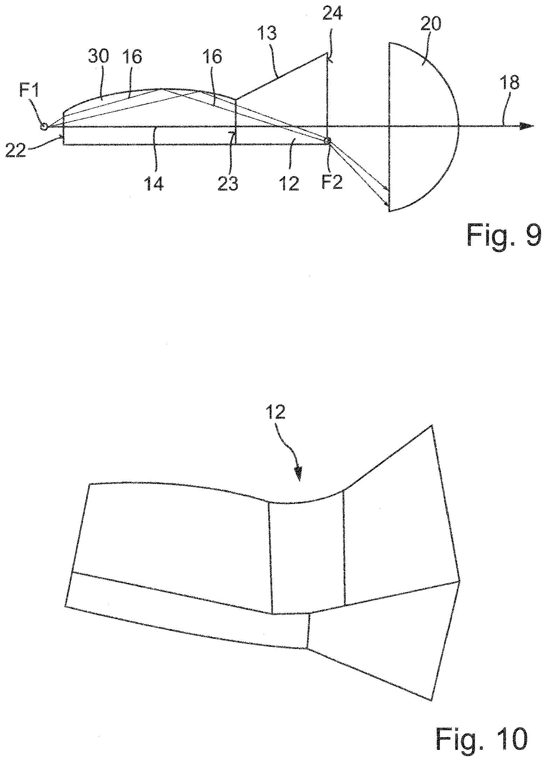

- Figur 9: Fig. 2 der DE 103 02 969 A1 ;
- Figur 10: Fig. 5b der DE 103 02 969 A1 ;

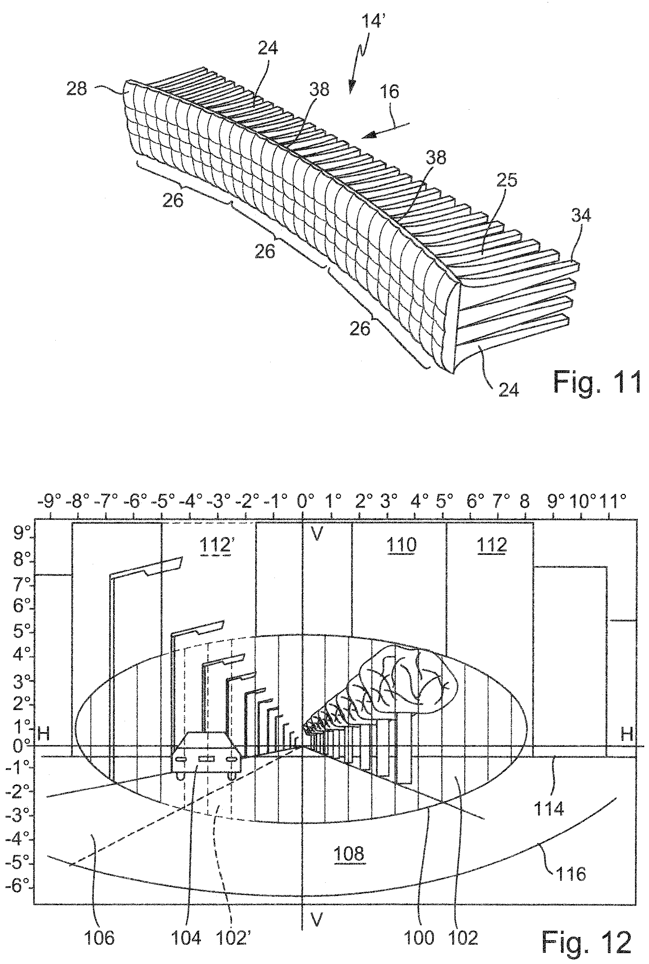

- Figur 11: Fig. 5 der DE 10 2009 053 581 B3;
- Figur 12: eine mit einem erfindungsgemäßen Lichtmodul erzielte, einer bestimmten Verkehrssituation entsprechende Spotverteilung einer Fernlicht-Lichtverteilung;

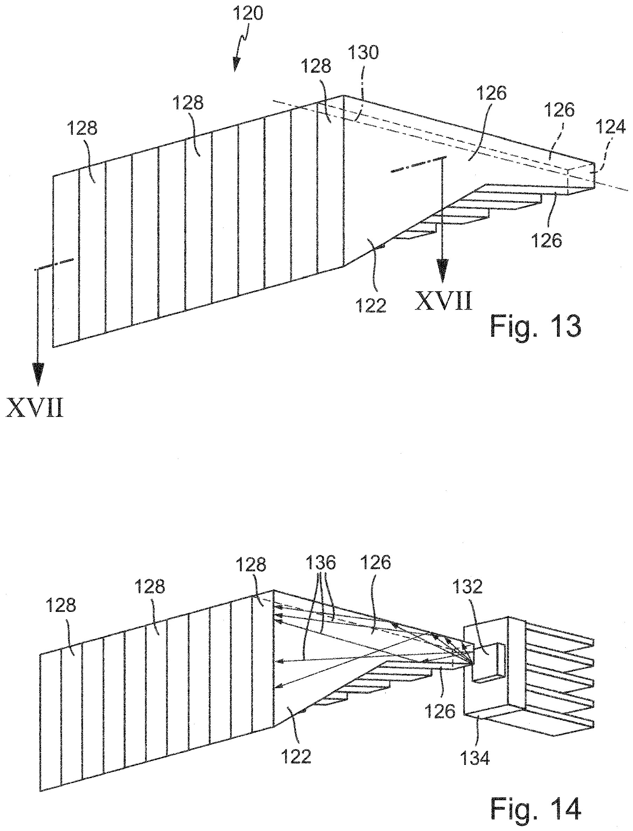

- Figur 13: ein lineares Optik-Array eines erfindungsgemäßen Lichtmoduls zur Erzeugung einer Spotverteilung einer Fernlicht-Lichtverteilung;
- Figur 14: das lineare Optik-Array aus Figur 13 mit beispielhaft eingezeichneter Lichtquelle;

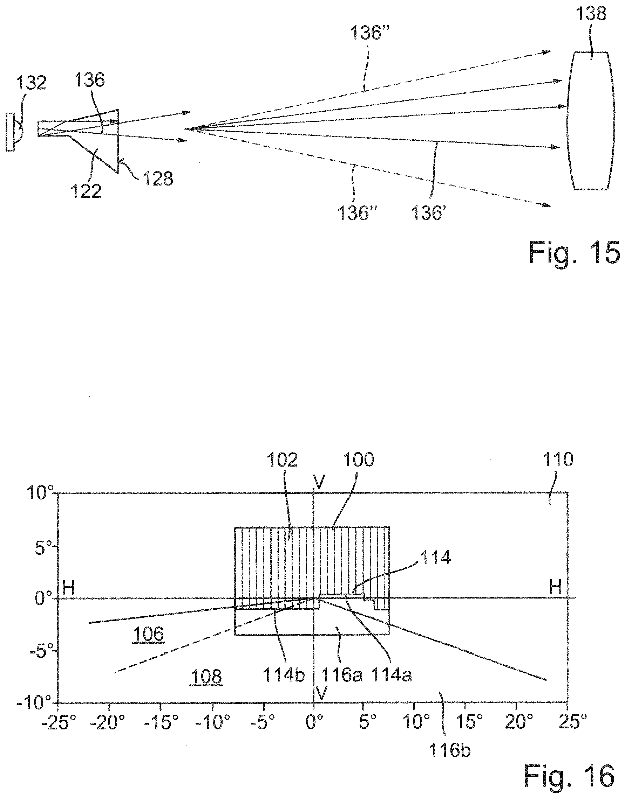

- Figur 15: einen Strahlengang in einem Unter-Modul eines erfindungsgemäßen Lichtmoduls zur Veranschaulichung des Funktionsprinzips der Optokommutatoren des linearen Optik-Arrays;
- Figur 16: ein Beispiel für eine Fernlicht-Lichtverteilung mit einem durch das erfindungsgemäße Lichtmodul erzeugten Spotverteilung;

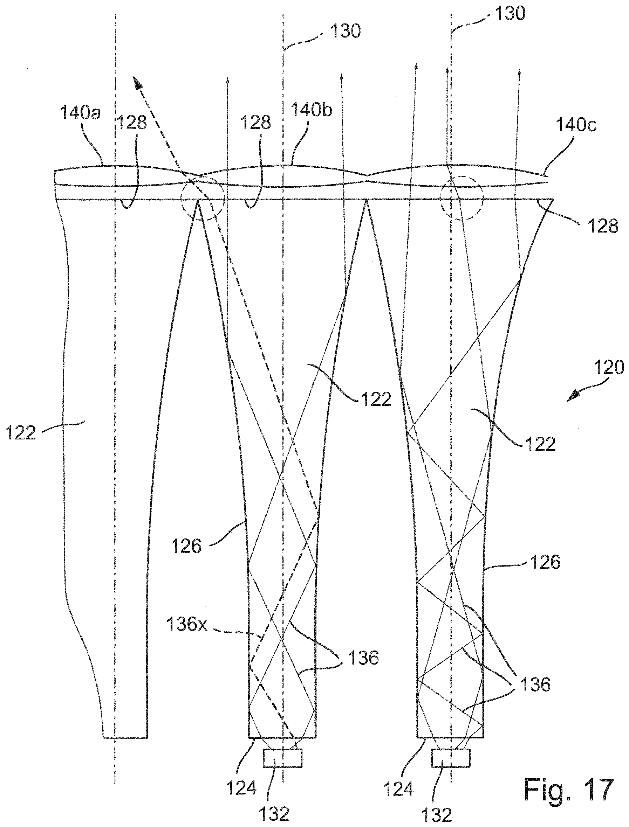

- Figur 17: eine Schnittansicht entlang einer horizontalen Schnittebene XVII durch das lineare Optik-Array eines erfindungsgemäßen Lichtmoduls aus Figur 13;

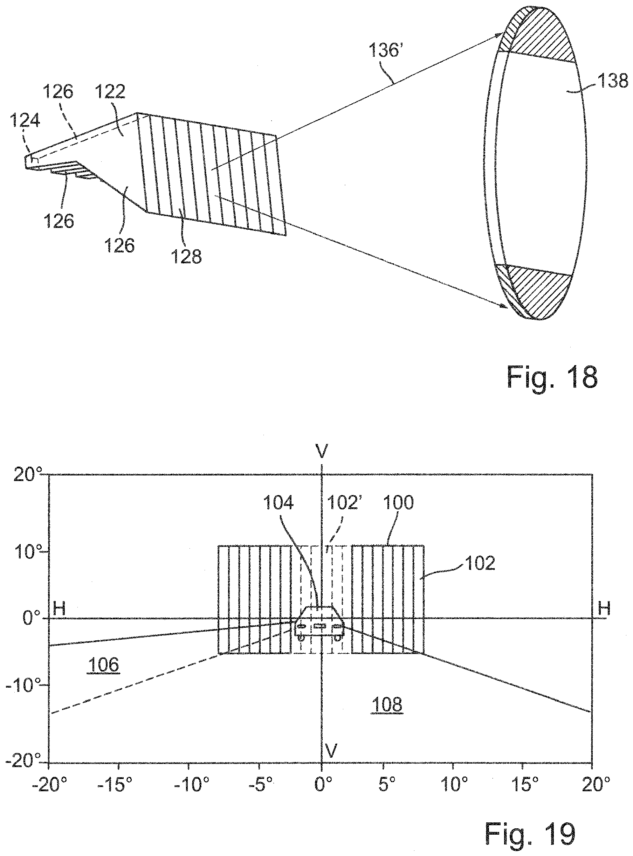

- Figur 18: ein lineares Optik-Array eines erfindungsgemäßen Lichtmoduls zusammen mit einer im Strahlengang angeordneten Sekundäroptik;
- Figur 19: eine mit einem erfindungsgemäßen Lichtmodul erzielte, einer bestimmten Verkehrssituation entsprechende Spotverteilung einer Fernlicht-Lichtverteilung;

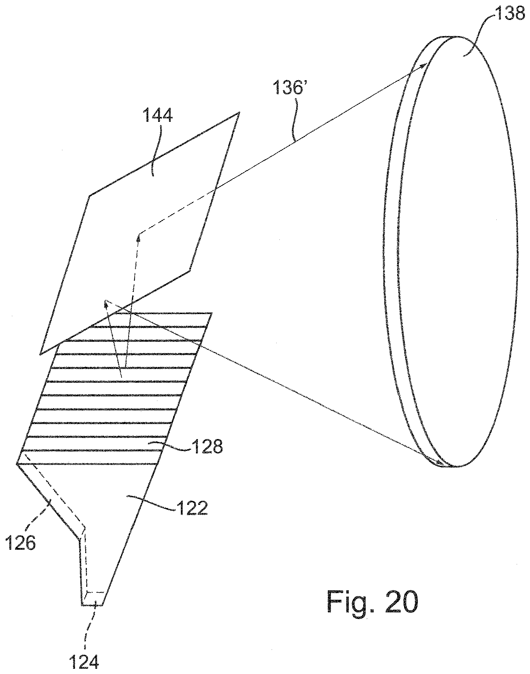

- Figur 20: eine weitere Ausführungsform eines erfindungsgemäßen Lichtmoduls mit an einem Spiegel umgelenktem Strahlengang;

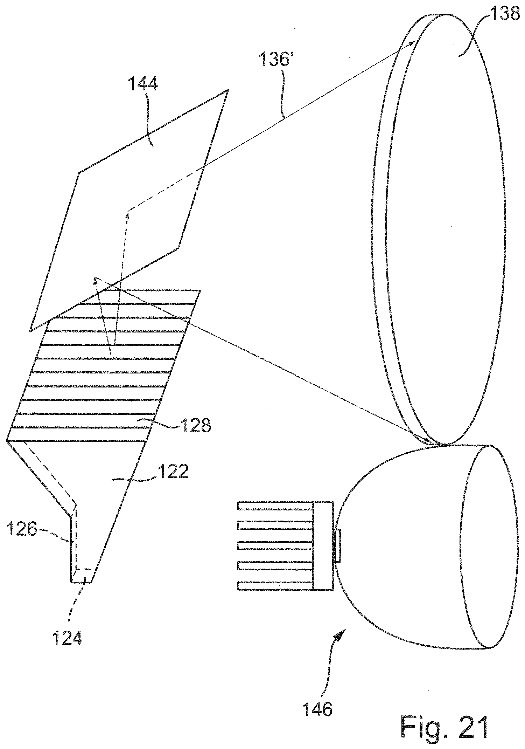

- Figur 21: das Lichtmodul aus Figur 20 in Kombination mit einem anderen Lichtmodul eines Scheinwerfers;

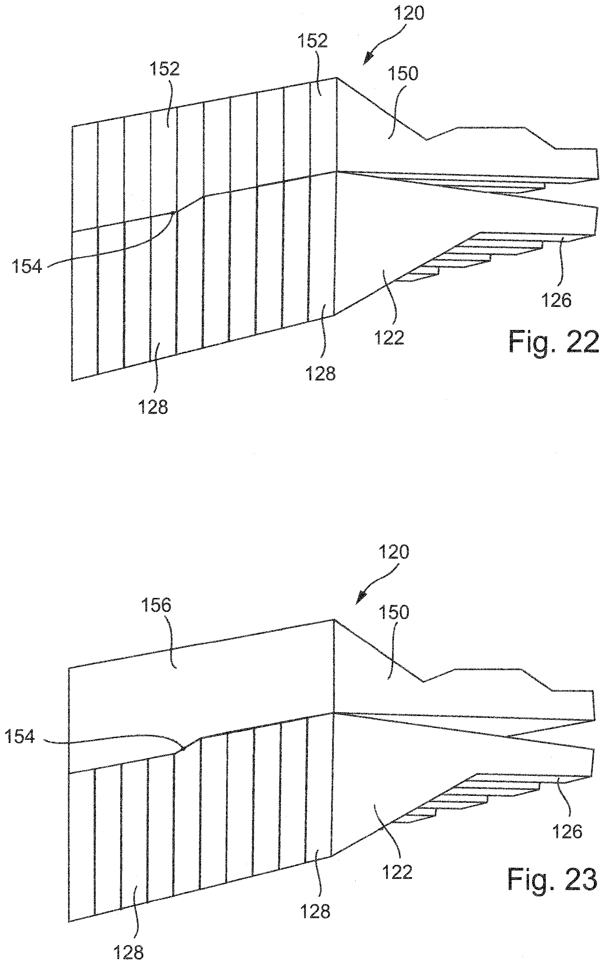

- Figur 22: eine weitere Ausführungsform eines erfindungsgemäßen Lichtmoduls in Kombination mit einem anderen Lichtmodul zur Erzeugung einer Spotverteilung einer Abblendlicht-Lichtverteilung;
- Figur 23: eine weitere Ausführungsform eines erfindungsgemäßen Lichtmoduls in Kombination mit einem anderen Lichtmodul zur Erzeugung einer Spotverteilung einer Abblendlicht-Lichtverteilung;

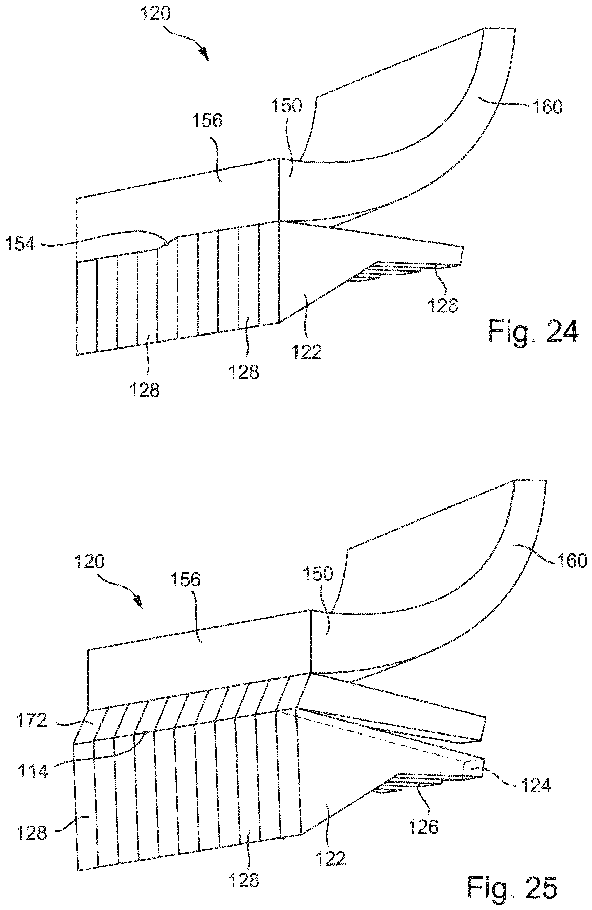

- Figur 24: eine weitere Ausführungsform eines erfindungsgemäßen Lichtmoduls in Kombination mit einem anderen Lichtmodul zur Erzeugung einer Spotverteilung einer Abblendlicht-Lichtverteilung; und
- Figur 25: eine weitere Ausführungsform eines erfindungsgemäßen Lichtmoduls in Kombination mit zwei anderen Lichtmodulen zur Erzeugung einer Spotverteilung einer Abblendlicht-Lichtverteilung und einer Grundverteilung einer Fernlicht-Lichtverteilung.

Die vorliegende Erfindung betrifft ein Lichtmodul zur Realisierung eines Fernlichtspots, genauer gesagt einer Spotverteilung einer Fernlicht-Lichtverteilung. Dabei wird eine Fernlicht-Lichtverteilung durch eine Überlagerung eines gebündelten Spotlichts mit einem diffusen, breit streuenden Grundlicht erzeugt. Während das Spotlicht eher für die Reichweite des Fernlichts zuständig ist, sorgt das Grundlicht für eine sog. Halo-Effekt, d.h. für eine flächige Ausleuchtung um das Spotlicht herum, insbesondere für eine gute Seitenausleuchtung an den Fahrbahnrändern und für eine gute Ausleuchtung oberhalb des Spotlichts, um einen sog. "Tunneleffekt" zu verhindern, bei dem zwar durch das Spotlicht eine gute Reichweite erzielt wird, der Fahrer aber aufgrund fehlender Ausleuchtung oberhalb des Spotlichts das Gefühl hat, durch einen Tunnel zu fahren.

Dabei kann das Spotlicht sowie das Grundlicht auf einen Fernbereich oberhalb einer Hell-/ Dunkelgrenze einer abgeblendeten Lichtverteilung beschränkt sein. Zur Erzeugung eines die gesetzlichen Anforderungen erfüllenden Fernlichts muss durch ein zusätzliches Lichtbündel, bspw. ein Abblendlichtbündel, auch der Bereich unterhalb der Hell-/ Dunkelgrenze ausgeleuchtet werden. In diesem Fall ergänzen sich die Fernlicht-Lichtverteilung und die Abblendlicht-Lichtverteilung zu dem gesetzeskonformen Fernlicht. Geringfügige Überlagerungen der Fernlicht-Lichtverteilung und der Abblendlicht-Lichtverteilung sind möglich.

Es ist aber auch denkbar, dass sich das Spotlicht und das Grundlicht auch in den Bereich der abgeblendeten Lichtverteilung unterhalb der Hell-/ Dunkelgrenze erstrecken. In diesem Fall könnte eine Überlagerung des Spotlichts mit dem Grundlicht bereits zu einem die gesetzlichen Anforderungen erfüllenden Fernlicht führen, so dass es eines zusätzlichen abgeblendeten Lichtbündels nicht mehr bedarf.

Eine durch ein erfindungsgemäßes Lichtmodul realisierbare Fernlicht-Spotverteilung, wie sie sich auf einem in einem Abstand zu dem Lichtmodul angeordneten senkrechten Messschirm ergibt, ist beispielhaft in Figur 12 gezeigt und mit dem Bezugszeichen 100 bezeichnet. Es ist deutlich zu erkennen, dass das Spotlicht in eine Vielzahl vertikaler, streifenförmiger Segmente 102 unterteilt ist. Dabei nimmt in dem dargestellten Beispiel die Höhe der Segmente 102 vom Zentrum zum Rand des Spotlichts 100 hin ab. Es ist aber auch denkbar, dass die streifenförmigen Segmente 102 über die gesamte horizontale Erstreckung des Spotlichts 100 eine weitgehend konstante Höhe aufweisen. Ebenfalls deutlich zu erkennen ist, dass einige Streifen 102' des Spotlichts 100, die sich in einer Zone befinden, in der andere Verkehrsteilnehmer 104 detektiert wurden, aus der Lichtverteilung 100 ausgeblendet sind. Es wäre auch denkbar, lediglich eines der Segmente 102 auszublenden, falls die Zone klein genug wäre (bspw. wenn der andere Verkehrsteilnehmer noch sehr weit weg von dem Fahrzeug ist). In dem dargestellten Beispiel umfasst die Zone mit dem anderen Verkehrsteilnehmer 104 eine vor dem Kraftfahrzeug, in welches das erfindungsgemäße Lichtmodul eingebaut ist, liegende Fahrbahn 106, die dem Gegenverkehr zugeordnet ist. Dabei fährt das Fahrzeug auf der eigenen Verkehrsseite 108. Dies gilt für Rechtsverkehr, wäre aber in entsprechender Weise auch auf Linksverkehr übertragbar.

Der Spotverteilung 100 überlagert ist in Figur 12 eine Grundverteilung 110 eingezeichnet. Diese ist in einige wenige Blocksegmente 112 unterteilt, die in der Breite jeweils die Breite mehrerer streifenförmiger Segmente 102 des Spotlichts 100 umfassen. Zudem haben die Blocksegmente 112 eine größere Höhe als die Streifen 102 des Spotlichts 100. Von dem Grundlicht 110 ist in Figur 12 lediglich ein Teil dargestellt, es kann sich in horizontaler Richtung noch weiter erstrecken als in Figur 12 gezeigt. Es ist deutlich zu erkennen, dass ein Streifen 112' des Grundlichts 110, der eine Zone umfasst, in der der andere Verkehrsteilnehmer 104 detektiert wurde, aus der Lichtverteilung 110 ausgeblendet ist. Selbstverständlich wäre es denkbar, bei Bedarf auch mehr als ein Blocksegment 112' auszublenden. Ein entsprechendes Lichtmodul zur Erzeugung eines solchen Grundlichts 100 ist bspw. Gegenstand der nachveröffentlichten DE 10 2011 017 632.2 und dort ausführlich beschrieben.

Das in Figur 12 beispielhaft gezeigte Grundlicht 110 erstreckt sich bis zu einer horizontalen Hell-/ Dunkelgrenze 114 einer Abblendlichtverteilung 116. Die Hell-/ Dunkelgrenze 114 verläuft dabei zumindest bereichsweise knapp unterhalb einer Horizontalen HH der Lichtverteilung. Zur Erzielung eines den gesetzlichen Anforderungen entsprechenden Fernlichts muss die Fernlicht-Lichtverteilung 100, 110 durch ein zusätzliches abgeblendetes Lichtbündel überlagert werden, das beispielsweise ein Abblendlichtbündel 116 sein kann, das sich unterhalb der Hell-/ Dunkelgrenze 114 erstreckt.

Das in Figur 12 beispielhaft gezeigte Spotlicht 100 verläuft weitgehend symmetrisch zu einer Vertikalen VV der Lichtverteilung. Es ist jedoch denkbar, dass das Lichtmodul zur Erzeugung des Spotlichts 100 oder Teile davon horizontal verschwenkbar sind, so dass bei Bedarf auch ein asymmetrisch zur Vertikalen VV angeordnetes Spotlicht 100 erzeugt werden kann.

Ein Teil eines erfindungsgemäßen Lichtmoduls zur Erzeugung der Spotverteilung 100 ist beispielhaft in den Figuren 13 und 14 gezeigt. Das Lichtmodul umfasst ein lineares Optik-Array 120, das mehrere in einer einzigen Zeile nebeneinander angeordnete Primäroptikelemente 122 (sog. Optokommutatoren) umfasst. Die Optikelemente 122 können als Vorsatzoptiken (sog. TIR-Optiken) aus einem transparenten Material, bspw. Glas, Kunststoff oder Silikon, oder als ein offener Kollimator (z.B. herkömmlicher Reflektor) ausgebildet sein. In dem dargestellten Beispiel sind die Optikelemente 122 als Vorsatzoptiken ausgebildet.

Jedes der Optikelemente 122 des linearen Optik-Arrays 120 weist mindestens eine Lichteintrittsfläche 124 auf, die mindestens einer dem Optikelement 122 zugeordneten Lichtquelle zugewandt ist und über die von der oder den Lichtquellen ausgesandtes Licht in das Optikelement 122 eingekoppelt wird. Die Seitenwände 126 eines Optikelements 122 sind vorzugsweise als Licht reflektierende Flächen ausgebildet, bspw. in Form von totalreflektierenden Grenzflächen einer Vorsatzoptik aus transparentem Material mit einer Brechzahl n>1 oder als Spiegelflächen eines Reflektors, um zumindest einen Teil des eingekoppelten Lichts zu reflektieren. Ferner weist jedes Optikelement 122 mindestens eine, vorzugsweise der mindestens einen Lichteintrittsfläche 124 gegenüberliegende Lichtaustrittsfläche 128 auf, über die zumindest ein Teil des eingekoppelten Lichts, gegebenenfalls nach einer Reflexion an den Seitenflächen 126, ausgekoppelt wird. Die Austrittsflächen 128 sind bei im Kraftfahrzeug bestimmungsgemäß eingebautem Lichtmodul streifenförmig mit einer im Wesentlichen vertikalen Längserstreckung ausgebildet. Die Optikelemente 122 weiten sich ausgehend von der oder den Lichteintrittsflächen 124 bis zu der oder den Lichtaustrittsflächen 128 zumindest in einer Ebene trichterförmig auf, so dass zumindest eine der Seitenwände 126 des Optikelements 122 schräg zu einer Längsachse 130 des Optikelements 122 verläuft. Die Seitenwände 126 können eben oder konkav oder konvex gewölbt ausgebildet sein. Die Austrittsflächen 128 von nebeneinander angeordneten Optikelementen 122 grenzen unmittelbar, vorzugsweise ohne Luftspalt, aneinander.

In Figur 14 ist beispielhaft zusätzlich noch eine dem vordersten Optikelement 122 zugeordnete Lichtquelle in Form einer Leuchtdiode (LED) 132 dargestellt. Die LED 132 ist entweder unmittelbar oder über ein Trägerelement auf einem Kühlkörper 134 befestigt und elektrisch kontaktiert. Die LED 132 ist vorzugsweise derart angeordnet, dass ihre Hauptabstrahlrichtung im Wesentlichen der Längserstreckung 130 des ihr zugeordneten Optikelements 122 entspricht. Zudem sind in das Optikelement 122 beispielhaft einige Lichtstrahlen 136 des eingekoppelten und an den Seitenflächen 126 totalreflektierten Lichts auf ihrem Weg zu der Lichtaustrittfläche 128 eingezeichnet. Anhand der eingezeichneten Lichtstrahlen 136 ist gut zu erkennen, dass das eingekoppelte Licht in vertikaler Richtung aufgeweitet wird. Zur Verbesserung der Effizienz des Systems wäre es denkbar, dass das von der LED 132 ausgesandte Licht zunächst gebündelt wird, bevor es über die Lichteintrittsfläche 124 in das Optikelement 122 eingekoppelt wird. Eine zur Bündelung geeignete TIR-Vorsatzoptik ist bspw. aus der DE 10 2007 033 438 A1 bekannt. Die Vorsatzoptik könnte sogar integraler Bestandteil der Eintrittsfläche 124 sein.

Die streifenförmigen Lichtaustrittsflächen 128 des im Betriebszustand in das Kraftfahrzeug eingebauten Lichtmoduls sind höher als breit. Anhand der Figur 15 ist veranschaulicht, dass die Besonderheit einer derartigen Geometrie darin liegt, dass durch die geringere Konzentration des Lichts (verglichen zum LED-Matrix-Fernlicht) in der vertikalen Ebene in einem Austrittsquerschnitt von ca. 3° die ausgekoppelten Lichtstrahlen 136' eine geringere Divergenz aufweisen. Zum Vergleich sind gestrichelt und mit dem Bezugszeichen 136" bezeichnet die aus einem Optik-Array eines herkömmlichen LED-Matrix-Beams ausgekoppelten Lichtstrahlen eingezeichnet. Aufgrund der geringeren Divergenz der Lichtstrahlen 136' kann eine sehr hohe Effizienz erreicht werden bei dennoch geringer Höhe einer im weiteren Strahlengang angeordneten abbildenden Projektionslinse 138.

Die Einbettung des Spotlichts 100 in eine Fernlicht-Lichtverteilung ist in Figur 16 skizziert. Zusätzlich zu dem Fernlichtspot 100 und dem Fernlicht-Grundlicht 110 ist in dem dargestellten Beispiel noch ein Abblendlichtspot 116a sowie ein Abblendlicht-Grundlicht 116 b vorgesehen. Hier ist also die Abblendlichtverteilung 116 aus Figur 12 in zwei Teile aufgeteilt, nämlich den Spot 116a und das Grundlicht 116b. Sowohl der Fernlichtspot 100 als auch der Abblendlichtspot 116a besitzen nicht die gleiche breite Ausleuchtung wie ein bekanntes, herkömmliches Bi-Xenon- oder Halogen-Abblendlicht bzw. Fernlicht und wären von der Erscheinung her wahrscheinlich nicht akzeptabel, obwohl die gesetzlichen Anforderungen nach ECE formal erfüllt werden könnten. Aus diesem Grund ist für jede Lichtfunktion (Abblendlicht/ Fernlicht) eine zusätzliche Grund- oder Halo-Ausleuchtung 110, 116b vorgesehen, um Seitenausleuchtungen von 30° bis 45° jeweils rechts und links der Vertikalen VV zu erreichen. Diese Seitenausleuchtung erfordert aber nur geringe Beleuchtungsstärken und kann daher technisch relativ einfach mit unterschiedlichen Systemen gelöst werden.

In dem dargestellten Beispiel enden die Streifen 102 des Fernlichtspots 100 nach unten an der Hell-/ Dunkelgrenze 114 des Abblendlichtspots 116a. Die Hell-/Dunkelgrenze 114 hat einen im Wesentlichen horizontalen Verlauf, wobei ein auf der eigenen Verkehrsseite angeordneter erster Abschnitt 114a höher angeordnet ist als ein auf der Gegenverkehrsseite angeordneter zweiter Abschnitt 114b. Zwischen den beiden horizontalen Abschnitten 114a, 114b ist eine Stufe ausgebildet. Der Abblendlichtspot 116a kann auch als Autobahnlicht-Spot bezeichnet werden. Das Fernlicht-Grundlicht 110 ist nicht in verschiedene Blocksegmente unterteilt und kann bei der Detektion von anderen Verkehrsteilnehmern allenfalls als Ganzes deaktiviert werden.

Die charakteristischen Eigenschaften des erfindungsgemäß vorgeschlagenen Fernlichtspots 100 sind die folgenden:
- horizontale Ausdehnung der einzelnen streifenförmigen Segmente 102 zwischen 0,5° und 3°, vorzugsweise zwischen 1° und 1,5°;
- vertikale Ausdehnung der Segmente 102 von etwa 3° bis 20°, vorzugsweise von 5° bis 15°, besonders bevorzugt von 5° bis 8°;
- die Auskoppelelemente (Auskoppelflächen 128 der einzelnen Optokommutator-Elemente 122) sind höher als breit;
- die Auskoppelelemente 128 können peripher in Höhe wie Breite variabel sein, vorteilhaft kann z.B. eine Vergrößerung der horizontalen Breite ab einer geometrischen Straßenposition von +/- 5° vertikal auf Segmente mit 1,5° bis 2° Breite sein;
- zumindest eine der Seitenflächen 126 der Optokommutator-Elemente 122 kann lichtbildend geformt sein, wie dies an sich bspw. aus der DE 103 02 969 A1 bekannt ist;
- im Bereich der Abbildung am Horizont HH erreicht das erfindungsgemäße Lichtmodul bzw. die dadurch realisierte Spotverteilung 100 der Fernlicht-Lichtverteilung die höchste Intensität, analog einem üblichen Fernlicht etwa 80 lx bis 120 lx; nach oben hin kann die Intensität in den Segmenten 102 wie bei üblichem Fernlicht abfallen;
- die Leistung der Kühlung (Lüfter, Heatpipes etc.) der LEDs 132 kann der jeweils verwendeten eingeprägten Leistung des Lichtmoduls bzw. der LEDs 132 angepasst werden;
- jede LED 132 oder Lichtquelle eines jeden Optikelements 122 kann individuell betrieben werden, d.h. die Leistung der Lichtquellen 132 kann individuell eingestellt werden. So können bei Geradeausfahrt die LEDs 132 in einem mittleren Bereich des Lichtmoduls mit hoher Intensität betrieben werden und die LEDs an den Randbereichen mit einer niedrigeren Intensität. Damit könnte eine Fernlicht-ähnliche Lichtverteilung generiert werden, die in der Nähe des HV-Punktes (Schnittpunkt zwischen der Horizontalen HH und der Vertikalen VV) etwa 100 lx bis 120 lx aufweist, auf dem Horizont bei etwa 5° horizontal aber nur noch 30 lx bis 50 lx. Bei Gegenverkehr 104 oder vorausfahrenden Fahrzeugen 104 kann die Leistung der das Vorderfahrzeug 104 umgebenden Streifen 102 (das sind die Streifen 102 neben den deaktivierten Streifen 102') auf maximale Leistung hochgefahren werden, um dort eine Sichtverbesserung zu ermöglichen, ohne das Vorderfahrzeug zu blenden.
- bei Kurvenfahrten kann das Lichtgebirge (Maximum in der Mitte, zum Rand hin abfallend) auch durch dynamische Leistungszuweisung zu den einzelnen LEDs so variiert werden, dass ein Fernlicht-Kurvenlicht-Effekt entsteht (Maximum in Richtung des Rands bewegen, dem Straßenverlauf/ Lenkradeinschlag folgend);
- die Lichtverteilung benachbarter Funktionen, etwa eines Halo-Fernlichts 110 (vgl. Figur 16), kann an die Streifen 102 des Fernlichtspots 100 anschließen, oder sich mit den am Rand des Spotlichts 100 befindlichen Streifen 102 sogar überlappen;
- nach unten in die Abblend-Grundverteilung 116b (vgl. Figur 16) ist kein scharfer Übergang erforderlich; wenn ein Abblendlichtspot 116a aus einem anderen Modul vorhanden ist, kann dieser den Fernlichtspot 100 ebenfalls überlappen.

Die Abbildung der Lichtverteilung am Austritt einzelner Optikelemente 122 kann vorzugsweise mit einer Linse 138 geschehen (vgl. Figuren 15 und 18). Reflexionssysteme sind allerdings ebenfalls möglich, aber etwas aufwendig. Die Linse 138 ist aus transparentem Material, Glas oder vorzugsweise Kunststoff. Da die Farbdispersion des abbildenden Elements (der abbildenden Linse) bei den abzubildenden vertikalen und horizontalen Hell-/ Dunkelgrenzen einzelner Streifen deutlich zum Vorschein kommt, kann die Linse 138 mit einer Farbkorrektur auf der Oberfläche versehen sein oder als Mehrfachlinse mit achromatischer Korrektur der Abbildung ausgeführt sein. Eine achromatische Korrektur ist auch in einem Mehrfachspritzprozess mit unterschiedlichen Kunststoffen mit wiederum unterschiedlichen Brechungsindizes bzw. Abbe-Zahlen möglich, wie dies an sich bspw. aus der nachveröffentlichten DE 10 2010 026 423 bekannt ist.

Ferner kann die vertikale Ausdehnung nach unten bzw. oben mit der Linse 138 weichgezeichnet werden, um horizontale scharfe Kanten der streifenförmigen Lichtverteilung 100 zu vermeiden. Dazu werden auch für die langen Segmentkanten die aus der DE 10 2009 053 581 B3 bekannten Prinzipien anhand der Figur 17 näher erläutert. Figur 17 zeigt eine Schnittansicht entlang einer in Figur 13 eingezeichneten in etwa horizontalen Schnittebene XVII. Die Trichterform der Optikelemente 122 des Optik-Arrays 120 ist deutlich zu erkennen. Durch die Trichterform werden über eine Lichteintrittsfläche 124 in ein Optikelement 122 eingekoppelte Lichtstrahlen, bspw. die Lichtstrahlen 136, gebündelt. Die gebündelten Lichtstrahlen verlassen das Optikelement 122 und tragen nach dem Durchtritt durch eine Sekundäroptik in gewünschter Weise zur Erzeugung von einem der streifenförmigen Segmente 102 der Spotverteilung 100 bei.

Einige der Lichtstrahlen, bspw. die Lichtstrahlen 136x, können jedoch nicht in der gewünschten Weise gebündelt werden und erzeugen nach dem Austritt aus dem Optikelement 122 unerwünschte Intensitätsmaxima bzw. -minima in dem Segment 102 und damit in dem Spotlicht 100. Um dies zu verhindern, sind im weiteren Strahlengang den Lichtaustrittsflächen 128 der Optikelemente 122 nachgeordnet zusätzliche optisch wirksame Austrittsoptiken 140 angeordnet. Jedem der Optikelemente 122 sind mehrere Austrittsoptiken 140 zugeordnet. So ist bspw. dem in Figur 17 gezeigten mittleren Optikelement 122 eine Hauptaustrittsoptik 140b mit sammelnden Eigenschaften auf der optischen Achse 130 des mittleren Optikelements 122 und neben der Hauptaustrittsoptik 140b zu beiden Seiten jeweils eine Nebenaustrittsoptik 140a und 140c. Eine entsprechende Zuordnung gilt auf für alle anderen Optikelemente 122 des Optik-Arrays 120.

Ein Großteil des durch eines der Optikelemente 122 gebündelten Lichts tritt durch die dem Optikelement 122 zugeordnete Hauptaustrittsoptik (z.B. Austrittsoptik 140b) und das übrige durch das Optikelement 122 gebündelte Licht durch die beiden dem Optikelement zugeordneten Nebenaustrittsoptiken (z.B. Austrittsoptiken 140a, 140c) hindurch. Insbesondere gelangen diejenigen Lichtstrahlen 136x durch die Nebenaustrittsoptiken, die von dem Optikelement 122 nicht in der gewünschten Weise gebündelt wurden. Beim Durchtritt durch die Nebenaustrittsoptik wird der Lichtstrahl 136x noch weiter gestreut, so dass er nicht mehr durch die dem Optik-Array 120 im Strahlengang nachgeordnete Sekundäroptik, z.B. eine Projektionslinse 138, hindurchtritt, sondern an dieser vorbei läuft bzw. von einer geeigneten Blende geblockt wird. Dadurch wird verhindert, dass nicht oder schlecht gebündelte Lichtstrahlen, wie bspw. der Lichtstrahle 136x, an der Erzeugung des Spotlichts 100 beteiligt sind.

Die abbildende Projektionslinse 138 (vgl. Figur 18) kann auch nicht-rund sein, d.h. mit in gewissen Grenzen variabler Außenkontur der optischen Fläche. So ist es bspw. denkbar, dass die Linse 138 an der Ober- und der Unterseite abgeflacht ist (gestrichelte Linie in Figur 18), so dass der schraffierte Bereich der Linse 138 weggeschnitten wäre. Dadurch ergibt sich eine besonders flach bauende Linse. Weiterhin kann eine Halterung für die Linse 138 oder können teiltransparente Elemente zur Streuung des Lichts direkt an die optische Fläche der Linse 138 und/oder die Lichtaustrittsflächen 128 der Optokommutatoren 122 angespritzt sein.

Figur 19 zeigt ein weiteres Ausführungsbeispiel einer Fernlicht-Spotverteilung 100, wie sie mit der vorliegenden Erfindung erzielt werden kann. Es fällt insbesondere die streifenförmige Unterteilung des Fernlichtspots 100 auf. Ferner ist zu erkennen, dass die mittleren Streifen 102', wo sich ein anderer Verkehrsteilnehmer 104 befindet, deaktiviert sind, um eine Blendung des Verkehrsteilnehmers 104 zu verhindern und andererseits aber neben dem Verkehrsteilnehmer 104 durch die aktivierten Streifen 102 eine optimale Ausleuchtung zu ermöglichen. Bei dem Verkehrsteilnehmer 104 handelt es sich um ein auf der eigenen Fahrbahn 108 vorausfahrendes Fahrzeug.

Charakteristische Eigenschaften der Abbildung der Auskoppelelemente 128 sind die folgenden:
- farbkorrigierte Abbildung, verringerte Farbstreifen (verrrinerter vertikaler Öffnungswinkel, folglich geringere Brechung an der abbildenden Optik, folglich weniger Farbdispersion in der Vertikalen, folglich kleinere Farbsäume insbesondere horizontal verlaufender Kanten);
- Optokommutator 122 herstellbar aus Glas, Silikon oder Kunststoff;
- scharfe vertikale Hell-/ Dunkelgrenze (ca. 0,5° von 95% der maximalen Intensität bis zum blendfreien Bereich bei <5% der maximalen Intensität);
- aufgeweichte horizontale Kanten;
- Linse 138 nicht rund, frei wählbare Linsenkontur, insbesondere abgeflacht;
- Linse 138 als Achromat im Sinne einer Farbkompensation, Kombination verschiedener Materialien unterschiedlicher Abbe-Zahlen;
- Linse 138 aus Kunststoff bzw. Glas unterschiedlicher Materialien unterschiedlicher Abbe-Zahlen.

Der Strahlengang 136' der Auskopplung kann auf unterschiedlichen Wegen verlaufen. Die Auskopplung kann bspw. über eine direkte Abbildung mit einer Linse 138 erzeugt werden, wie dies bspw. in Figur 18 gezeigt ist. Alternativ kann im Strahlengang ein Spiegel 144, ein Prisma oder ein anderes lichtumlenkendes Element angeordnet sein, um den Strahlengang 136' umzulenken, bspw. um 90° zur Hauptaustrittsrichtung des Lichts aus den Auskoppelflächen 128 der Optokommutatoren 122. Ein entsprechendes Ausführungsbeispiel ist in Figur 20 gezeigt. Dadurch lässt sich die Bautiefe des erfindungsgemäßen Lichtmoduls weiter verkürzen.

Der durch die Umlenkung des Strahlengangs 136' frei werdende Bauraum in einem Scheinwerfergehäuse oder im Frontbereich eines Kraftfahrzeugs kann für ein weiteres Lichtmodul 146 zur Erzeugung einer weiteren Lichtfunktion, z.B. eines Tagfahrlichts, Positionslichts, Blinklichts, oder für andere Elemente (Blocksegmente für Halo-Fernlicht etc.) genutzt werden, wie dies bspw. in Figur 21 gezeigt ist. Das dort gezeigte weitere Lichtmodul umfasst eine oder mehrere LED-Lichtquellen, die auf einem Kühlkörper angeordnet sind, und eine Bündelungsoptik in Form eines Reflektors. Selbstverständlich sind auch andere Ausgestaltungen des weiteren Lichtmoduls 146 denkbar.

Charakteristische Eigenschaften des Strahlengangs 136' der Auskopplung sind die folgenden:
- Verkürzung der Bautiefe des Lichtmoduls durch Umlenkung mit Prisma oder Spiegel (Figur 20);
- Kombination des Bauraums im Schenwerefergehäuse mit anderen Elementen (Figur 21);
- Kombination der Kühlung gemeinsam mit anderen Elementen.

Das heißt für die LEDs 132 des Lichtmoduls und die LED-Lichtquellen des weiteren Lichtmoduls 146 könnten derselbe oder dieselben Kühlkörper verwendet werden.

Des Weiteren ist es denkbar, zusätzlich zu den Streifensegmenten 122 zur Erzeugung der vertikalen Streifen 102 des Fernlichtspots 100 weitere Elemente zur Auskopplung in dem Scheinwerfer vorzusehen. Zusätzlich zu den horizontal nebeneinander angeordneten Streifensegmenten 122, die ein Fernlicht erzeugen, können auch weitere Auskoppel-Elemente 150 vorgesehen werden. Verschiedene mögliche Ausführungsbeispiele sind in den Figuren 22 bis 24 gezeigt. Charakteristische Eigenschaften zusätzlicher Elemente 150 der Auskopplung sind die folgenden:
- mehrere Zeilen an Auskoppelelementen (vgl. Figuren 22 bis 25) ;
- unterschiedliche Technologien der Auskoppelelemente (Matrix, Streifen, Blockelement, etc.) (vgl. Figuren 22 bis 25) ;
- unterschiedliche Einkopplungsrichtungen (vgl. Figuren 24 und 25) ;
- Spotlicht 116a des Abblendlichts und Spotlicht 100 des Fernlichts hinter gemeinsamer Linse 138.

Das weitere Auskoppel-Element 150 aus Figur 22 umfasst eine Vielzahl von in einer Zeile nebeneinander angeordneten Optokommutatoren, die eine streifenförmige, vertikal ausgerichtete Lichtaustrittsfläche 152 aufweisen. Die Lichtaustrittsflächen 128 des Spotlicht-Moduls sind nach unten hin durch eine im Wesentlichen horizontale Kante 154 begrenzt, die dem Verlauf einer horizontalen Hell-/ Dunkelgrenze einer abgeblendeten Lichtverteilung entspricht. Dadurch erhalten die Streifen 102 an ihren Unterseiten eine vertikale Veränderung in der horizontalen Ausdehnung, so dass die Streifen 102 mit ihren Unterseiten einen Anstieg der Hell-/ Dunkelgrenze 114; 114a (z.B. 15°- oder 45°-Anstieg) bilden, analog dem üblichen Abblendlicht 116; 116a, 116b. Die Optokommutatoren 122 des Spotlicht-Optikarrays erzeugen also streifenförmige Segmente 102 der Fernlicht-Spotverteilung 100, die alle oberhalb der horizontalen Hell-/ Dunkelgrenze 114; 114a der Abblendlichtverteilung 116; 116a, 116b verlaufen. Die Optokommutatoren des weiteren Auskoppelelements 150 erzeugen streifenförmige Segmente eines Abblendlicht-Spots 116a und enden oben an der horizontalen Hell-/ Dunkelgrenze 114; 114a. Die beiden Lichtmodule zusammen erzeugen somit eine Spotverteilung 100, 116a, die sowohl im Fernlichtbereich als auch im Abblendlichtbereich liegt.

Entsprechendes gilt auch für das Ausführungsbeispiel aus Figur 23, wobei hier allerdings das weitere Auskoppelelement 150 statt mehrerer nebeneinander angeordneter Optokommutatoren lediglich ein einziges breites massives Auskoppelelement mit einer einzigen Lichtaustrittsfläche 156 umfasst. Ein ähnliches Element wird bspw. in der DE 102 52 228 A1 und der DE 103 02 969 A1 als Optokommutator verwendet. Auch dieses Element 150 erzeugt einen Abblendlichtspot 116a, der oben an der horizontalen Hell-/ Dunkelgrenze 114; 114a endet. Der Abblendlichtspot 116a hat jedoch keine streifenförmigen Segmente, sondern ist als ein einziges Blocksegment ausgebildet. Auch hier erzeugen die beiden Lichtmodule zusammen eine Spotverteilung 100, 116a, die sowohl im Fernlichtbereich als auch im Abblendlichtbereich liegt.

Die Anordnungen der Figuren 22 und 23 können, genauso wie in Figur 21 bezüglich des Strahlengangs 136' der Auskopplung dargestellt, auch mit einer Spiegelung verknüpft werden, um die Bautiefe der Lichtmodule bzw. der Optikarrays 122, 150 zu verringern. Die Einkopplung muss auch nicht gerade verlaufen, sondern kann - wie bspw. in den Figuren 24 und 25 gezeigt - aus Bauraum- oder thermischen Gründen auch mit einer frei geformten und gekrümmten Einkopplungsoptik 160 stattfinden. Selbstverständlich kann dabei statt des dargestellten Blockelements 150 mit der einen großflächigen Auskoppelfläche 156 (vgl. Figur 23) auch ein lineares Optik-Array eingesetzt werden, das mehrere nebeneinander angeordnete Optokollimatoren 152 mit jeweils streifenförmiger Auskoppelfläche 152 aufweist (vgl. Figur 22) .

In Figur 25 ist ein weiteres Ausführungsbeispiel dargestellt, bei dem zwischen dem Optik-Array 120 des erfindungsgemäßen Lichtmoduls und dem darunter angeordneten weiteren Lichtmodul mit dem Blockelement 150 und dem gebogenen Einkoppelelement 160 noch ein weiteres Lichtmodul angeordnet, das vom Aufbau und der Funktion her dem erfindungsgemäßen Lichtmodul sehr ähnlich ist. Allerdings weiten sich die einzelnen Optokollimatoren 170 von ihrer Lichteintrittsfläche zu ihrer Lichtaustrittsfläche 172 nicht trichterförmig auf, so dass die Austrittsflächen 172 im Wesentlichen gleich groß oder geringfügig größer sind wie die gegenüberliegenden Eintrittsflächen. Vor den Lichteintrittsflächen der Optokollimatoren 170 sind Lichtquellen, vorzugsweise in Form von einer oder mehreren LEDs, angeordnet, so dass das von diesen ausgesandte Licht zumindest teilweise in die Optokollimatoren 170 eingekoppelt wird. Das aus den Austrittsflächen 172 austretende Licht kann bspw. zur Realisierung eines Abblendlichtspots 116a eingesetzt werden, wobei zwischen dem durch das Optikarray 120 erzeugten Fernlichtspot und dem Abblendlichtspot 116a eine im Wesentlichen gerade Hell-/ Dunkelgrenze 114 ausgebildet ist. Das aus dem weiteren Blockelement 150 über die Fläche 156 ausgekoppelte Licht könnte bspw. zur Realisierung einer Grundverteilung (Fernlicht-Grundlicht 110 oder Abblendlicht-Grundlicht 116b oder Fernlicht-Grundlicht 110 und Abblendlicht-Grundlicht 116b) dienen.

Mit der in Figur 25 gezeigten Ausführungsform der Erfindung kann ein Reichweiteelement auch aus der Matrixzeile 170 erstellt werden, die ein Kurvenlicht nachbildet, deren LEDs individuell schaltbar und leistungsgeregelt sind. Das Reichweiteelement 170 ist in Figur 25 unterhalb der Optokommutatoren 122 mit streifenförmiger Auskoppelfläche 128 zur Erzeugung des Fernlichtspots 100 angeordnet.

Charakteristische Eigenschaften der Ausführungsform aus Figur 25 sind die folgenden:
- mehrere Zeilen (122; 150; 170) an Auskoppelelementen (128; 156; 172);
- unterschiedliche Technologien (z.B. Matrix, Streifen, Blockelement, etc.);
- unterschiedliche Einkopplungsrichtungen;
- Kurvenlicht mit schrägen Streifen (172) möglich;
- Spotlicht (116a) des Abblendlichts und Kurvenlicht hinter gemeinsamer Linse (138).

Die zweite Zeile der Auskopplung (vgl. die untere Zeile 150 in den Figuren 22 bis 24 bzw. die mittlere Zeile 170 in Figur 25) kann als Abblendlichtspot 116a verwendet werden. Dazu ist ein weiteres breites Abblendlicht-Grundlicht erforderlich. Bei einer höheren Geschwindigkeit des Kraftfahrzeugs kann das Erfordernis auftreten, dass eine erhöhte Abblendlichtreichweite erforderlich ist (z.B. auf einer Autobahn oder Schnellstraße), aber das über der Auskoppelzeile 150; 170 für Abblendlicht angeordnete Fernlicht nicht eingeschaltet werden kann/darf. In diesem Fall kann über eine Leuchtweiteregelung das ganze Modul oder über einen Mikroaktuator lediglich der Auskoppelblock 150; 170 hinter der Linse 138 verschoben werden. Der Mikroaktuator bietet die Möglichkeit, die sehr kleinen vertikalen Verschiebungen (etwa 0,3 mm bis 1 mm) sehr effizient (hochgenau und energetisch sparsam) umzusetzen. Um die Reichweite der Lichtverteilung weiter zu erhöhen, wird vorgeschlagen, die Leistung der LEDs 132 in dem entsprechenden Auskoppelelement 150; 170 zu erhöhen. Mit diesen Maßnahmen kann ohne großen Aufwand ein Autobahnlicht erreicht werden.

Zusammenfassend betrifft die Erfindung also ein Lichtmodul eines Kraftfahrzeugs zur Erzeugung einer Spotverteilung 100 einer Fernlicht-Lichtverteilung 100 und 110, die durch eine Überlagerung der Spotverteilung 100 und einer durch mindestens ein anderes Modul erzeugten Grundverteilung 110 gebildet ist. Es wird vorgeschlagen, dass das Lichtmodul in mehrere separat ansteuerbare Unter-Module unterteilt ist, die mehrere streifenförmige Segmente 102 der Spotverteilung 100 erzeugen, wobei sich die streifenförmigen Segmente 102 zu der Spotverteilung 100 ergänzen. Nachfolgend sind Merkmale von vorteilhaften Weiterbildungen der Erfindung angegeben, die entweder für sich alleine oder in einer beliebigen Kombination zum Gegenstand von Ansprüchen gemacht werden könnten.

Vorzugsweise weisen die Unter-Module des Lichtmoduls jeweils mindestens eine Lichtquelle 132 auf, wobei die Lichtquellen 132 als Halbleiterlichtquellen, insbesondere als Leuchtdioden (LEDs), ausgebildet sind. Besonders bevorzugt ist, wenn die Unter-Module in genau einer Zeile nebeneinander angeordnet sind. Vorzugsweise sind die Unter-Module derart ausgebildet und angeordnet, dass die streifenförmigen Segmente 102 auf einem in einem Abstand vor dem Lichtmodul angeordneten senkrechten Messschirm eine Längserstreckung in einer Vertikalen (VV) oder lediglich geringfügig geneigt zu der Vertikalen (VV) aufweisen. Ferner ist vorteilhaft, wenn die Unter-Module derart ausgebildet und angeordnet sind, dass die streifenförmigen Segmente 102 in der Spotverteilung 100 in genau einer Zeile nebeneinander angeordnet sind.

Bevorzugt sind die Unter-Module derart ausgebildet, dass die streifenförmigen Segmente 102 zumindest zu den Seiten hin scharf abgegrenzte Ränder aufweisen. Vorzugsweise sind die Unter-Module derart ausgebildet, dass der Gradient der Beleuchtungsstärke an den Rändern der streifenförmigen Segmente 102 innerhalb von 0,5° horizontal von etwa 95% eines Intensitätsmaximums auf weniger als 5% des Intensitätsmaximums abfällt. Vorteilhafterweise weist das Lichtmodul zehn bis 30, vorzugsweise 20 bis 25, Unter-Module auf. Dabei erzeugt jedes der Unter-Module genau ein streifenförmiges Segment 102 der Spotverteilung 100. Vorzugsweise ist das Lichtmodul an einer beliebigen Stelle im Frontbereich eines Kraftfahrzeugs angeordnet.

## Patentansprüche

1. Kraftfahrzeugscheinwerfer mit einem Grundlichtmodul und einem Spotmodul, wobei das Grundlichtmodul zur Erzeugung einer Fernlicht-Lichtverteilung (100,110) eingerichtet ist und wobei das Spotmodul zur Erzeugung einer Spotverteilung (100) der Fernlicht-Lichtverteilung eingerichtet ist, wobei die Fernlicht-Lichtverteilung (100,110) durch eine Überlagerung der Spotverteilung (100) und der Grundverteilung (110) gebildet ist, wobei das Spotmodul in mehrere separat ansteuerbare Unter-Module unterteilt ist, die mehrere streifenförmige Segmente (102) der Spotverteilung (100) erzeugen, wobei sich die streifenförmigen Segmente (102) zu der Spotverteilung (100) ergänzen, wobei die Fernlicht-Lichtverteilung (100, 110) zusätzlich eine Überlagerung einer Abblendlichtverteilung (116) mit einer horizontalen Hell-/ Dunkelgrenze (114) umfasst, wobei sich die Grundverteilung (110) in einem Bereich oberhalb der horizontalen Hell-/ Dunkelgrenze (114) erstreckt, wobei die Grundverteilung (110) in eine Vielzahl von nebeneinander angeordneten Blocksegmenten (112) unterteilt ist, die separat ansteuerbar sind, und wobei die Blocksegmente (112) der Grundverteilung (110) in ihrer Breite jeweils mehrere streifenförmige Segmente (102) der Spotverteilung (100) umfassen, **dadurch gekennzeichnet, dass** die streifenförmigen Segmente (102) der Spotverteilung (100) einen Fernbereich oberhalb der Hell-/ Dunkelgrenze (114) sowie einen Bereich unterhalb der Hell-/ Dunkelgrenze (114) ausleuchten, wobei die Spotverteilung in mehrere in einer einzigen Zeile nebeneinander angeordnete streifenförmige Segmente mit vertikaler Längserstreckung unterteilt ist, die sich nach unten bis in einen Abblendlichtbereich unterhalb der horizontalen Hell-DunkelGrenze erstrecken.

2. Kraftfahrzeugscheinwerfer nach Anspruch 1, **dadurch gekennzeichnet, dass** die Unter-Module jeweils mindestens eine Lichtquelle (132) aufweisen, und dass während des Betriebs des Spotmoduls die mindestens eine Lichtquelle (132) mindestens desjenigen Unter-Moduls deaktiviert ist, dessen streifenförmiges Segment (102) in einer Zone liegen würde, in der ein anderer Verkehrsteilnehmer (104) detektiert wurde.

3. Kraftfahrzeugscheinwerfer nach Anspruch 1 oder 2, **dadurch gekennzeichnet, dass** ein Verhältnis von Höhe der streifenförmigen Segmente (102) zu deren Breite mindestens 3 zu 1, vorzugsweise bis zu 10 zu 1, beträgt.

4. Kraftfahrzeugscheinwerfer nach einem der vorangegangenen Ansprüche, **dadurch gekennzeichnet, dass** die Unter-Module derart ausgebildet und angeordnet sind, dass die Breite der Spotverteilung (100) maximal etwa +/-20° horizontal und minimal etwa +/-5° horizontal, vorzugsweise maximal etwa +/-10° horizontal und minimal etwa +/-7° horizontal, beträgt.

5. Kraftfahrzeugscheinwerfer nach einem der vorangegangenen Ansprüche, **dadurch gekennzeichnet, dass** die Unter-Module derart ausgebildet sind, dass die Breite der einzelnen streifenförmigen Segmente (102) auf einem in einem Abstand vor dem Lichtmodul angeordneten senkrechten Messschirm etwa 1° bis 3° horizontal, vorzugsweise 1° bis 1,5° horizontal, beträgt.

6. Kraftfahrzeugscheinwerfer nach einem der vorangegangenen Ansprüche, **dadurch gekennzeichnet, dass** die Unter-Module derart ausgebildet sind, dass die Höhe der einzelnen streifenförmigen Segmente (102) auf einem in einem Abstand vor dem Lichtmodul angeordneten senkrechten Messschirm etwa 3° bis 20° vertikal, vorzugsweise 5° bis 15° vertikal, besonders bevorzugt 5° bis 8° vertikal oberhalb einer Horizontalen (HH) beträgt.

7. Kraftfahrzeugscheinwerfer nach einem der vorangegangenen Ansprüche, **dadurch gekennzeichnet, dass** die Unter-Module derart ausgebildet und angeordnet sind, dass in der Spotverteilung (100) nebeneinander angeordnete streifenförmige Segmente (102) an den Rändern keine bzw. lediglich eine geringe Überlappung aufweisen.

8. Kraftfahrzeugscheinwerfer nach Anspruch 7, **dadurch gekennzeichnet, dass** die Unter-Module derart ausgebildet und angeordnet sind, dass die Überlappung je Seite maximal 1/4 der Breite der streifenförmigen Segmente (102), insbesondere maximal 0,25° horizontal, beträgt.

9. Kraftfahrzeugscheinwerfer nach einem der vorangegangenen Ansprüche, **dadurch gekennzeichnet, dass** die Unter-Module derart ausgebildet sind, dass diejenigen streifenförmigen Segmente (102), die in der Spotverteilung (100) in der Nähe einer Vertikalen (VV) angeordnet sind, eine maximale Beleuchtungsstärke von 80 lx bis 120 lx in der Nähe eines Schnittpunkts (HV) einer Horizontalen (HH) und der Vertikalen (VV) aufweisen.

10. Kraftfahrzeugscheinwerfer nach Anspruch 9, **dadurch gekennzeichnet, dass** die Unter-Module derart ausgebildet sind, dass diejenigen streifenförmigen Segmente (102), die in einem Abstand von etwa 5° zu der Vertikalen (VV) angeordnet sind, eine maximale Beleuchtungsstärke von 30 lx bis 50 lx in der Nähe der Horizontalen (HH) aufweisen.

11. Kraftfahrzeugscheinwerfer nach einem der vorangegangenen Ansprüche, **dadurch gekennzeichnet, dass** das Spotmodul mehrere in genau einer Zeile nebeneinander angeordnete Halbleiterlichtquellen (132) aufweist, die sichtbares Licht aussenden, wobei im Strahlengang der Halbleiterlichtquellen (132) eine Primäroptik (120) angeordnet ist, die als eine Optik-Reihe mit mehreren in genau einer Zeile nebeneinander angeordneten optisch wirksamen Elementen (122) ausgestaltet ist und die das von den Halbleiterlichtquellen (132) ausgesandte Licht bündelt, wobei im weiteren Verlauf des Strahlengangs mindestens eine Sekundäroptik (138) angeordnet ist, welche die Lichtbündel zur Erzielung der Fernlicht-Spotverteilung (100) vor dem Kraftfahrzeug abbildet, wobei die Primäroptik (120) außer der Optik-Reihe mit den optisch wirksamen Elementen (122) im Strahlengang nach der Optik-Reihe angeordnete zusätzliche optisch wirksame Austrittsoptiken (140) aufweist, wobei jedem der optisch wirksamen Elemente (122) mehrere Austrittsoptiken 140) zugeordnet sind, nämlich eine Hauptaustrittsoptik (140b) mit sammelnden Eigenschaften auf der optischen Achse (130) des optisch wirksamen Elements (122) und neben der Hauptaustrittsoptik (140b) mindestens eine Nebenaustrittsoptik (140a, 140c), wobei ein Großteil des durch eines der optisch wirksamen Elemente (122) gebündelten Lichts durch die dem optisch wirksamen Element (122) zugeordnete Hauptaustrittsoptik (140b) und das übrige durch das optisch wirksame Element (122) gebündelte Licht durch eine oder mehrere dem optisch wirksamen Element (122) zugeordnete Nebenaustrittsoptiken (140a, 140c) hindurchtritt.

12. Kraftfahrzeugscheinwerfer nach Anspruch 11, **dadurch gekennzeichnet, dass** die Hauptaustrittsoptiken (140b) und die Nebenaustrittsoptiken (140a, 140c) jeweils eine Lichtaustrittsfläche mit einer Längserstreckung in vertikaler Richtung aufweisen.

13. Kraftfahrzeugscheinwerfer nach Anspruch 12, **dadurch gekennzeichnet, dass** die Lichtaustrittsflächen benachbarter Austrittsoptiken (140) entlang ihrer Seitenränder unmittelbar aneinander grenzen.

14. Kraftfahrzeugscheinwerfer nach einem der vorangegangenen Ansprüche, wobei die Unter-Module des Spotmoduls jeweils mindestens eine Lichtquelle (132) aufweisen und während des Betriebs des Lichtmoduls die mindestens eine Lichtquelle (132) mindestens desjenigen Unter-Moduls deaktiviert ist, dessen streifenförmiges Segment (102) in einer Zone liegen würde, in der ein anderer Verkehrsteilnehmer (104) detektiert wurde, **dadurch gekennzeichnet, dass** die Ansteuerung der Lichtquellen (132) der Unter-Module auf die Ansteuerung des Grundlicht-Moduls abgestimmt ist, so dass zeitgleich mit einer Deaktivierung zumindest desjenigen Teils der Grundverteilung (110; 116b), der in der Zone liegen würde, in der der andere Verkehrsteilnehmer (104) detektiert wurde, die mindestens eine Lichtquelle (132) des mindestens einen zu deaktivierenden Unter-Moduls deaktiviert wird.

15. Scheinwerferanlage für ein Kraftfahrzeug, umfassend zwei in einem Frontbereich seitlich an dem Fahrzeug angeordnete Kraftfahrzeugscheinwerfer, die jeweils nach einem der vorangegangenen Ansprüche ausgebildet sind, **dadurch gekennzeichnet, dass** einer der beiden Scheinwerfer ein Spotmodul umfasst, das die streifenförmigen Segmente (102) einer linken Seite der Spotverteilung (100) erzeugt, und der andere Scheinwerfer ein Spotmodul umfasst, das die streifenförmigen Segmente (102) einer rechten Seite der Spotverteilung (100) erzeugt, so dass sich die streifenförmigen Segmente (102) der Spotmodule der beiden Scheinwerfer zu der gesamten Spotverteilung (100) ergänzen oder zumindest teilweise überlagern.

## Claims

1. Motor vehicle headlamp having a basic light module and a spot module, the basic light module being set up to generate a high beam light distribution (100, 110) and the spot module being set up to generate a spot distribution (100) of the high beam light distribution, the high beam light distribution (100, 110) being formed by a superimposition of the spot distribution (100) and the basic distribution (110), wherein the spot module is divided into a plurality of separately controllable sub-modules which generate a plurality of strip-shaped segments (102) of the spot distribution (100), the strip-shaped segments (102) complementing each other to form the spot distribution (100), the high beam light distribution (100, 110) additionally comprising a superimposition of a low beam light distribution (116) with a horizontal bright/dark boundary (114), wherein the basic distribution (110) extends in an area above the horizontal light/dark boundary (114), wherein the basic distribution (110) is divided into a plurality of block segments (112) arranged next to each other, which can be separately controlled, and wherein the block segments (112) of the basic distribution (110) each comprise several strip-shaped segments (102) of the spot distribution (100) in their width, **characterized in that** the strip-shaped segments (102) of the spot distribution (100) illuminate a far range above the light/dark boundary (114) as well as a range below the light/dark boundary (114), wherein the spot distribution is divided into several strip-shaped segments with vertical longitudinal extension arranged side by side in a single line, which extend downwards into a low beam range below the horizontal light/dark boundary.

2. Motor vehicle headlamp according to claim 1, **characterized in that** the sub-modules each have at least one light source (132), and **in that** during operation of the spot module the at least one light source (132) of at least that sub-module whose strip-shaped segment (102) would lie in a zone in which another traffic participant(104) has been detected is deactivated.

3. Motor vehicle headlamp according to claim 1 or 2, **characterized in that** a ratio of the height of the strip-shaped segments (102) to their width is at least 3 to 1, preferably up to 10 to 1.

4. Motor vehicle headlamp according to one of the preceding claims, **characterized in that** the sub-modules are designed and arranged in such a way that the width of the spot distribution (100) is at most approximately +/- 20° horizontally and at least approximately +/- 5° horizontally, preferably at most approximately +/- 10° horizontally and at least approximately +/- 7° horizontally.

5. Motor vehicle headlamp according to one of the preceding claims, **characterized in that** the sub-modules are designed and arranged in such a way that the width of the individual strip-shaped segments (102) on a vertical measuring screen arranged at a distance in front of the light module is about 1° to 3° horizontal, preferably 1° to 1.5° horizontal.

6. Motor vehicle headlamp according to one of the preceding claims, **characterized in that** the sub-modules are designed in such a way that the height of the individual strip-shaped segments (102) on a vertical measuring screen arranged at a distance in front of the light module is approximately 3° to 20° vertically, preferably 5° to 15° vertically, particularly preferably 5° to 8° vertically above a horizontal (HH).

7. Motor vehicle headlamp according to one of the preceding requirements, **characterized in that** the sub-modules are designed and arranged in such a way that strip-shaped segments (102) arranged next to one another in the spot distribution (100) have no or only a slight overlap at the edges.

8. Motor vehicle headlamps according to claim 7, **characterised in that** the sub-modules are constructed and arranged in such a way that the overlap per side is at most 1/4 of the width of the strip-shaped segments (102), in particular at most 0.25° horizontally.

9. Motor vehicle headlamp according to one of the preceding claims, **characterized in that** the sub-modules are designed and arranged in such a way that those strip-shaped segments (102) which are arranged in the spot distribution (100) in the vicinity of a vertical (VV) have a maximum illuminance of 80 lx to 120 lx in the vicinity of a point of intersection (HV) of a horizontal (HH) and the vertical (VV).

10. Motor vehicle headlamp according to claim 9, **characterized in that** the sub-modules are designed in such a way that those strip-shaped segments (102) which are arranged at a distance of approximately 5° from the vertical (VV) have a maximum illuminance of 30 lx to 50 lx in the vicinity of the horizontal (HH).

11. Motor vehicle headlamp according to one of the preceding claims, **characterized in that** the spotlight module has a plurality of semiconductor light sources (132) which are arranged next to one another in exactly one line and emit visible light, a primary optic (120) being arranged in the beam path of the semiconductor light sources (132), which is designed as an optical row with a plurality of optically active elements (122) arranged next to one another in exactly one line and which focuses the light emitted by the semiconductor light sources (132), at least one secondary optical system (138) being arranged in the further course of the beam path, which secondary optical system images the light beams in front of the motor vehicle in order to achieve the high beam spot distribution (100), the primary optics (120) having, in addition to the optics series with the optically active elements (122), additional optically active exit optics (140) arranged in the beam path after the optics series, each of the optically active elements (122) being assigned a plurality of exit optics (140), namely a main exit optic (140b) with collecting properties on the optical axis (130) of the optically active element (122) and, in addition to the main exit optic (140b), at least one auxiliary exit optic (140a), 140c), wherein a majority of the light bundled by one of the optically active elements (122) passes through the main exit optics (140b) associated with the optically active element (122) and the remaining light bundled by the optically active element (122) passes through one or more auxiliary exit optics (140a, 140c) associated with the optically active element (122).

12. Motor vehicle headlamp according to claim 11, **characterized in that** the main exit optics (140b) and the auxiliary exit optics (140a, 140c) each have a light exit surface with a longitudinal extension in the vertical direction.

13. Motor vehicle headlamp according to claim 12, **characterized in that** the light exit surfaces of adjacent exit optics (140) are directly adjacent to each other along their side edges.

14. Motor vehicle headlamp according to one of the preceding claims, wherein the sub-modules of the spot module each have at least one light source (132) and during operation of the light module the at least one light source (132) of at least that sub-module whose strip-shaped segment (102) would lie in a zone is deactivated, in which another traffic participant(104) has been detected, **characterized in that** the control of the light sources (132) of the sub-modules is matched to the control of the basic light module, so that at the same time as at least that part of the basic distribution (110; 116b) which would be located in the zone in which the other traffic participant(104) was detected, the at least one light source (132) of the at least one sub-module to be deactivated is deactivated.

15. A headlamp system for a motor vehicle, comprising two motor vehicle headlamps arranged in a front region laterally on the vehicle, each of which is designed according to one of the preceding requirements, **characterised in that** one of the two headlamps comprises a spot module which generates the strip-shaped segments (102) of a left-hand side of the spot distribution (100), and the other headlamp comprises a spot module which generates the strip-shaped segments (102) of a right-hand side of the spot distribution (100) so that the strip-shaped segments (102) of the light modules of the two headlamps complement or at least partially overlap one another to form the entire spot distribution (100).

## Revendications

1. Projecteur de véhicule à moteur avec un module de lumière de base et un module de spot, dans lequel le module de lumière de base est conçu pour produire une distribution de lumière de feux de route (100, 110) et dans lequel le module de spot est conçu pour produire une distribution de spot (100) de la distribution de lumière de feux de route, dans lequel la distribution de lumière de feux de route (100, 110) est formée par une superposition de la distribution de spot (100) et de la distribution de base (110), dans lequel le module de spot est subdivisé en plusieurs sous-modules pouvant être commandés séparément, qui produisent plusieurs segments en forme de bande (102) de la distribution de spot (100), dans lequel les segments en forme de bande (102) se complètent en la distribution de spot (100), dans lequel la distribution de lumière de feux de route (100, 110) comprend en plus une superposition d'une distribution de feux de croisement (116) avec une limite obscurité-clarté horizontale (114), dans lequel la distribution de base (110) s'étend dans une région au-dessus de la limite obscurité-clarté horizontale (114), dans lequel la distribution de base (110) est subdivisée en une pluralité de segments de bloc (112) disposés les uns à côté des autres, qui peuvent être commandés séparément, et dans lequel les segments de bloc (112) de la distribution de base (110) comprennent dans leur largeur respectivement plusieurs segments en forme de bande (102) de la distribution de spot (100), **caractérisé en ce que** les segments en forme de bande (102) de la distribution de spot (100) éclairent une région lointaine au-dessus de la limite obscurité-clarté (114) ainsi qu'une région au-dessous de la limite obscurité-clarté (114), dans lequel la distribution de spot est subdivisée en plusieurs segments en forme de bande, disposés les uns à côté des autres en une seule ligne avec une étendue longitudinale verticale, qui s'étendent vers le bas jusque dans une région de feux de croisement au-dessous de la limite obscurité-clarté horizontale.

2. Projecteur de véhicule à moteur selon la revendication 1, **caractérisé en ce que** les sous-modules présentent respectivement au moins une source de lumière (132), et que pendant le fonctionnement du module de spot, l'au moins une source de lumière (132) au moins du sous-module dont le segment en forme de bande (102) se situerait dans une zone dans laquelle un autre usager de la route (104) avait été détecté est désactivée.

3. Projecteur de véhicule à moteur selon la revendication 1 ou 2, **caractérisé en ce qu'**un rapport de la hauteur des segments en forme de bande (102) sur la largeur de ceux-ci atteint au moins 3 à 1, de préférence jusqu'à 10 à 1.

4. Projecteur de véhicule à moteur selon l'une quelconque des revendications précédentes, **caractérisé en ce que** les sous-modules sont réalisés et disposés de telle sorte que la largeur de la distribution de spot (100) atteint au maximum sensiblement +/-20° horizontalement et au minimum sensiblement +/-5° horizontalement, de préférence au maximum sensiblement +/-10° horizontalement et au minimum sensiblement +/-7° horizontalement.

5. Projecteur de véhicule à moteur selon l'une quelconque des revendications précédentes, **caractérisé en ce que** les sous-modules sont réalisés de telle sorte que la largeur des segments en forme de bande (102) individuels sur un écran de mesure vertical disposé à une certaine distance devant le module lumineux atteint sensiblement 1° à 3° horizontalement, de préférence 1° à 1,5° horizontalement.

6. Projecteur de véhicule à moteur selon l'une quelconque des revendications précédentes, **caractérisé en ce que** les sous-modules sont réalisés de telle sorte que la hauteur des segments en forme de bande (102) individuels sur un écran de mesure vertical disposé à une certaine distance devant le module lumineux atteint sensiblement 3° à 20° verticalement, de préférence 5° à 15° verticalement, de manière particulièrement préférée 5° à 8° verticalement au-dessus d'une horizontale (HH).

7. Projecteur de véhicule à moteur selon l'une quelconque des revendications précédentes, **caractérisé en ce que** les sous-modules sont réalisés de telle sorte que les segments en forme de bande (102) disposés les uns à côté des autres dans la distribution de spot (100) ne présentent sur les bords pas de chevauchement ou seulement un léger chevauchement.

8. Projecteur de véhicule à moteur selon la revendication 7, **caractérisé en ce que** les sous-modules sont réalisés et disposés de telle sorte que le chevauchement atteint pour chaque face au maximum 1/4 de la largeur des segments en forme de bande (102), en particulier au maximum 0,25° horizontalement.

9. Projecteur de véhicule à moteur selon l'une quelconque des revendications précédentes, **caractérisé en ce que** les sous-modules sont réalisés de telle sorte que les segments en forme de bande (102) qui sont disposés dans la distribution de spot (100) à proximité d'une verticale (VV) présentent une intensité d'éclairage maximale de 80 lx à 120 lx à proximité d'un point d'intersection (HV) d'une horizontale (HH) et de la verticale (VV).

10. Projecteur de véhicule à moteur selon la revendication 9, **caractérisé en ce que** les sous-modules sont réalisés de telle sorte que les segments en forme de bande (102) qui sont disposés à une distance de sensiblement 5° par rapport à la verticale (VV) présentent une intensité d'éclairage maximale de 30 lx à 50 lx à proximité de l'horizontale (HH).

11. Projecteur de véhicule à moteur selon l'une quelconque des revendications précédentes, **caractérisé en ce que** le module de spot présente plusieurs sources de lumière à semi-conducteur (132) disposées les unes à côté des autres en une seule ligne, qui émettent une lumière visible, dans lequel une optique primaire (120), qui est réalisée en tant que rangée optique avec plusieurs éléments optiquement actifs (122) disposés les uns à côté des autres en une seule ligne et qui focalise la lumière émise par les sources de lumière à semi-conducteur (132), est disposée dans le trajet de rayon des sources de lumière à semi-conducteur (132), dans lequel au moins une optique secondaire (138), laquelle reproduit les faisceaux de lumière pour obtenir la distribution de spot de feux de route (100) devant le véhicule à moteur, est disposée dans la suite du trajet de rayon, dans lequel l'optique primaire (120), excepté la rangée optique avec les éléments optiquement actifs (122), présente des optiques de sortie (140) optiquement actives additionnelles disposées après la rangée optique dans le trajet de rayon, dans lequel plusieurs optiques de sortie (140), à savoir une optique de sortie principale (140b) avec des propriétés collectrices sur l'axe optique (130) de l'élément optiquement actif (122) et, en plus de l'optique de sortie principale (140b), au moins une optique de sortie secondaire (140a, 140c), sont associées à chacun des éléments optiquement actifs (122), dans lequel une majeure partie de la lumière focalisée par un des éléments optiquement actifs (122) passe à travers l'optique de sortie principale (140b) associée à l'élément optiquement actif (122) et la lumière restante focalisée par l'élément optiquement actif (122) à travers une ou plusieurs optiques de sortie secondaires (140a, 140c) associées à l'élément optiquement actif (122).

12. Projecteur de véhicule à moteur selon la revendication 11, **caractérisé en ce que** les optiques de sortie principales (140b) et les optiques de sortie secondaires (140a, 140c) présentent respectivement une surface de sortie de lumière avec une étendue longitudinale dans la direction verticale.

13. Projecteur de véhicule à moteur selon la revendication 12, **caractérisé en ce que** les surfaces de sortie de lumière d'optiques de sortie (140) voisines sont directement adjacentes les unes aux autres le long de leurs bords latéraux.

14. Projecteur de véhicule à moteur selon l'une quelconque des revendications précédentes, dans lequel les sous-modules du module de spot présentent respectivement au moins une source de lumière (132) et, pendant le fonctionnement du module lumineux, l'au moins une source de lumière (132) d'au moins le sous-module dont le segment en forme de bande (102) se situerait dans une zone dans laquelle un autre usager de la route (104) avait été détecté est désactivée, **caractérisé en ce que** la commande des sources de lumière (132) des sous-modules est adaptée à la commande du module de lumière de base, de sorte que l'au moins une source de lumière (132) de l'au moins un sous-module à désactiver est désactivée en même temps qu'une désactivation au moins de la partie de la distribution de base (110 ; 116b) qui se situerait dans la zone dans laquelle l'autre usager de la route (104) avait été détecté.

15. Installation de projecteur pour un véhicule à moteur, comprenant deux projecteurs de véhicule à moteur disposés dans une région avant latéralement sur le véhicule, qui sont réalisés respectivement selon l'une quelconque des revendications précédentes, **caractérisée en ce qu'**un des deux projecteurs comprend un module de spot, qui produit les segments en forme de bande (102) d'un côté gauche de la distribution de spot (100), et l'autre projecteur un module de spot qui produit les segments en forme de bande (102) d'un côté droit de la distribution de spot (100), de sorte que les segments en forme de bande (102) des modules de spot des deux projecteurs se complètent en la distribution de spot (100) totale ou se chevauchent au moins en partie.
